# EUROPEAN PATENT APPLICATION

(11) **EP 4 789 847 A1**
(43) Date of publication of application: **12.08.2026**
(21) Application number: 25156075.1
(22) Date of filing: 05.02.2025
(51) Int. Cl.: B29C 65/18, B29C 65/78, B29C 65/00, B29L 31/00

(54) **PACKAGE SEALING APPARATUS**

(71) Applicant: MARS INCORPORATED, McLean, VA 22101 (US)
(72) Inventor: SCHORMAIR, Hauke, 27283 Verden (Aller) (DE); PLUECKER, Marc, 27283 Verden (Aller) (DE)
(74) Representative: Haseltine Lake Kempner LLP

(57) **Abstract**

Herein is described a method of preparing a sealed package containing food, the method comprising:
providing a packaging containing food, the packaging having an opening formed from two opposing walls;
compressing the opposing walls of the packaging together with opposing heat sealing members, thereby closing the opening and fusing the walls together to form a first heat-sealed portion of the packaging;
compressing the first heat-sealed portion of the packaging with opposing cooling sealing members,
wherein at least one of the cooling sealing members has a surface, wherein a first portion is a patterned surface comprising peaks and/or troughs, and a second portion is flat and extends across at least a portion of the first heat-sealed portion of the packaging and corresponds to a flat section of the opposing cooling sealing member. Also described is an apparatus for preparing a sealed package containing food operable to carry out this method and a heat-sealed package containing food and comprising opposing walls, wherein the heat-sealed package is formable in the method.

## Description

### Field of Invention

The present disclosure relates to methods of preparing sealed packages containing food, apparatuses for sealing packages containing food, and sealed packages containing food.

### Background

Food products are often stored in sealed packages which are sterilised in order to prolong the quality and shelf-life of the product and to prevent the food from spoiling or becoming unsafe to consume. It is desirable that the sealed packages can be stored for extended periods of time without the content spoiling and that the seal integrity remains intact. It is therefore important that the seal of the package is hermetically tight such that the product does not perish throughout its shelf-life.

Food packages are commonly made from flexible plastic material or laminates. These packages are filled with product and sealed before sterilisation. One method of sealing such packages involves initially heating and compressing the two surfaces of the opening in the package together, followed by cooling the sealed section to deliver the final shape and pattern of the seal. The initial sealing is usually performed by compressing the package opening between the flat surfaces of two heated sealing tools. The cooling of the sealed section typically then takes place in a subsequent station where the newly formed seal is compressed between two cooling tools which have either a flat pattern or a crisscross pattern (i.e., a repeating pattern of small peaks and troughs) on their surface to maximise heat transfer.

For sealing food packages, seal integrity can be affected by contamination of the sealing area during the filling process, especially with liquid components of food. This contamination prevents the plastic from fusing properly, resulting in seal openings, often in the form of microchannels. These microchannels, though small (down to 10 µm), can allow microorganisms to re-infest the product, causing it to perish. Such channels are not easily detectable as the packaging does not lose content through them. Failures in the seal can be costly and result in food waste.

A common countermeasure against these microchannels is to squeeze out the contamination while sealing. This can be achieved by using high temperatures and pressures during sealing which are sufficient to displace and evaporate the contamination before the package seals. However, this method cannot be applied successfully for all types of packaging materials. While often suitable for conventional laminates such as those made from PET/AI/PP (polyethylene terephthalate/aluminium foil/polypropylene) layers, it is not always appropriate for other materials such as mono-material laminates made of PP. Mono-materials like PP-mono-materials are often more sensitive to heat and can only tolerate lower sealing temperatures of around 150 °C (compared to 220 °C which is typically used for conventional laminates). As a result, liquid in the sealing area is not sufficiently and/or reliably displaced/evaporated prior to fusing of the packaging. Cavities containing trapped steam or water therefore form in the seal and after pressure from the sealing or cooling tools is released, the seal partially opens.

It is therefore desirable to develop a sealing method for packages containing food which is able to overcome these issues and prevents food from spoiling within the packages. In particular a method which prevents the formation of microchannels in the seal and therefore achieves a hermetically tight seal. It would be desirable that this method was reliable such that a very low percentage of packages sealed by the method result in faulty seals, in turn reducing food waste and providing cost-savings. A further advantage would be if the method was suitable for sealing mono-material packages as well as conventional packages (i.e., those made from multi-materials) over a broad range of sealing temperatures.

### Summary of Invention

In a first aspect, there is provided a method of preparing a sealed package containing food, the method comprising:
providing a packaging containing food, the packaging having an opening formed from two opposing walls;
compressing the opposing walls of the packaging together with opposing heat sealing members, thereby closing the opening and fusing the walls together to form a first heat-sealed portion of the packaging;
compressing the first heat-sealed portion of the packaging with opposing cooling sealing members,
wherein at least one of the cooling sealing members has a surface, wherein a first portion is a patterned surface comprising peaks and/or troughs, and a second portion is flat and extends across at least a portion of the first heat-sealed portion of the packaging and corresponds to a flat section of the opposing cooling sealing member.

In a second aspect, there is provided an apparatus for preparing a sealed package containing food, the apparatus comprising:
opposing heat sealing members that can compress two opposing walls of packaging material together to fuse them together,
opposing cooling sealing members,
   wherein at least one of the cooling sealing members has a surface, wherein a first portion of the surface is a patterned surface comprising peaks and/or troughs, and a second portion is flat and corresponds to a flat section of the opposing cooling sealing member,
wherein the apparatus is operable to carry out the method of the first aspect.

In a third aspect, there is provided a heat-sealed package containing food and comprising opposing walls, wherein the heat-sealed package is formable in a method according to the first aspect, wherein the heat-sealed package comprises a heat-sealed portion comprising a first portion having an embossed pattern therein and a flat, unembossed second portion, extending in a line at least partway across the heat-sealed portion.

The integrity of seals of food packages is important in order to prevent spoiling of the food contained within. Defects in the seal can lead to bacterial contamination of the product after sterilisation, causing it to perish. The present inventors found that when sealing mono-material packages (for example, those made solely of polypropylene), contamination of the sealing area with food/liquid resulted in faulty seals due to the formation of microchannels. These microchannels were less frequently observed in former mixed material packaging as at the higher temperatures used when sealing mixed materials (of around 220 °C), the heat and pressure are sufficient to evaporate the liquid from the food that becomes trapped in the seal, and thus a tight continuous seal is formed. Although elevated temperatures and pressures during sealing after often employed to remove contamination in the seal, the present inventors found that this was not suitable for mono-materials such as PP-mono-materials as the temperature of sealing needs to be reduced (to, for example, around 150 °C). Excessive heating during sealing of mono-materials can be detrimental to the appearance of the final sealed package and to the quality of the seal.

With a desire to replace non-recyclable multi-material laminates such as PET/AL/PP which are commonly used for food packages, the inventors sought to develop a sealing method which was compatible with mono-materials and could form seals with high structural integrity. This would not only make the use of mono-materials more attractive to industry but would provide cost-savings and result in less food waste due to faulty packages.

The inventors have addressed the problem by altering the tooling involved in sealing. In previous equipment, there are both heat sealing tools, which compress and fuse the sides of the packaging together, and then cooler sealing tools, which serve to reduce stress or shrinkage of the weld seam, improve flatness of the packaging, e.g. a pouch, and/or the heat seal strength. The heat sealing tools typically have a flat surface. The cooler sealing tools are often patterned across their entire surface with smaller peaks and troughs (in a crisscross pattern)., i.e. they do not have a flat surface like the heat sealing tools. As a result, the cooling tools emboss the pattern of peaks into the packing along the seal. The inventors found that seals formed using cooling tools patterned with peaks and troughs on their surface were particularly vulnerable to defects. Without wishing to be bound to a particular theory, it was believed that the microchannels follow the embossed pattern, therefore connecting the inside of the package to the outside of the package through the seal, resulting in a leak. The inventors found that by introducing a flat portion across the patterned surfaces of the cooling tools, such that this flat surface forms a line across the previously heat-sealed portion of the packaging, the number of microchannels was reduced and hence the failure of packaging due to bacterial infection. In other words, it was found that microchannels can be significantly reduced by, after sealing at an elevated temperature with flat heat sealing tools, cooling the seal with a tool that impresses a flat line across the sealing area. It is believed that interrupting the crisscross pattern in the seal interrupts the microchannels, preventing them from connecting the inside of the package to the outside.

The method according to the first aspect of the present disclosure is able to reliably form seals with fewer defects that previous methods with both multi-material laminate packages and mono-material packages. Importantly, the sealing method results in seals with high structural integrity whilst not having a detrimental impact on the appearance of the outside of the package. The method of the first aspect is able to be performed efficiently by the apparatus of the second aspect, in particular due to the design of the cooling sealing tools. Furthermore, heat-sealed packages containing food are able to be produced in large numbers with a low number of defects.

### Brief Description of Figures

Figure 1 shows an example of a heat sealing tool with a C-shaped surface.
Figure 2 shows an example of a heat sealing tool with a continuous flat surface.
Figure 3 shows an example of a cooling sealing tool with a straight crisscross pattern (first portion) across the whole contacting surface thereof, and lacking a flat section (second portion). By straight crisscross pattern, this means the straight-line troughs are parallel to each of the perpendicular edges of the sealing tool, with the peaks being defined by the area between the troughs.
Figure 4 shows an example of a cooling sealing tool with an angled crisscross pattern (first portion) on the surface thereof, and lacking a flat section (second portion). By angled crisscross pattern, this means the straight-line troughs are set at an angle of 45 degrees to each of the perpendicular edges of the sealing tool, with the peaks being defined by the area between the troughs.
Figure 5 shows a schematic drawing of an example of a sealing system, using cooling sealing tools with a patterned surface, but lacking a flat section (second portion), e.g. such as those shown in Figures 3 and 4.
Figure 6 shows schematic drawings of an example of two opposing cooling sealing tools in an isometric view and an expanded view of an example of the surface of two opposing cooling sealing tools when compressed together in a cross-sectional view, showing the peaks being in alignment, i.e. meeting one another when the cooling sealing members are compressed together.
Figure 7 shows microchannels formed in a packaged sealed by heating sealing tools and cooling sealing tools (the top-left photograph in Figure 7 showing the whole package, and the other photographs in Figure 7 showing close-ups of the edges of the packaging).
Figure 8 shows an example of a cooling sealing tool of the present disclosure, i.e. having a first portion of the surface (804) that is a patterned surface comprising peaks and/or troughs, and a second portion that is flat (808).
Figure 9 shows a schematic drawing of the use of an example of cooling sealing tools of the present disclosure to seal a package.
Figure 10 shows an isometric view of the opposing cooling sealing tools when compressed.
Figure 11 shows a schematic drawing of an example of the use of a sealing system of the present disclosure.
Figure 12 shows schematic drawings of the use of another example of cooling sealing tools of the present disclosure to seal a package and an isometric view of the two opposing cooling sealing tools.
Figure 13 shows an isometric view of an example of opposing cooling sealing members.
Figure 14 shows a schematic drawing of an example of a "fill and seal" machine.
Figure 15 shows a schematic drawing of a sealed package containing food according to the present disclosure.
Figure 16 show a schematic drawing of an example of the surface of a cooling sealing member which comprises a flat portion which extends across the outer edges of the surface of the cooling sealing member and does not extend across the centre of the surface of the cooling sealing member.

### Detailed Description

It is noted that when discussing the method, apparatus, or the heat-sealed package containing food of the present disclosure, each of these discussions can be considered applicable to other examples whether or not they are explicitly discussed in the context of that example. Thus, for example, in discussing a component related to the method, such disclosure is also relevant to and directly supported in context of the apparatus, and *vice versa.*

Unless otherwise stated, the optional and preferred features, and combinations thereof, described for the method of preparing sealed packages are equally applicable to the apparatus for preparing sealed packages and/or the sealed packages and *vice versa.* Package and packaging are used synonymously throughout this disclosure.

### Method of preparing sealed packages

In a first aspect, there is provided a method of preparing a sealed package containing food, the method comprising:
providing a packaging containing food, the packaging having an opening formed from two opposing walls;
compressing the opposing walls of the packaging together with opposing heat sealing members, thereby closing the opening and fusing the walls together to form a first heat-sealed portion of the packaging;
compressing the first heat-sealed portion of the packaging with opposing cooling sealing members,
   wherein at least one of the cooling sealing members has a surface, wherein a first portion is a patterned surface comprising peaks and/or troughs, and a second portion is flat and extends across at least a portion of the first heat-sealed portion of the packaging and corresponds to a flat section of the opposing cooling sealing member.

### Food

According to the present disclosure, there is provided a method of preparing a sealed package containing food. The food may be any food suitable for consumption, for example the food may be human food or pet food. In some embodiments, the food is pet food. The pet food may be feline pet food or canine pet food. The food may be or may comprise a liquid, for example a gravy. The liquid may be or may comprise water. The food may be selected from a wet food composition, a semi-wet petfood composition and a dry petfood composition. The food is preferably selected from a wet food and a semi-wet food composition, preferably a wet petfood or semi-wet petfood composition.

As used herein, the term "wet food" or "wet food composition" generally refers to a food composition having a moisture content of about 30% or more, generally of more than about 40% by weight, relative to the total weight of the food composition. Preferably, the wet food composition has a moisture content lower than about 90% in weight, relative to the total weight of the food composition. In general, it is the final product of a process comprising a final step of sterilization (instead of a drying step). In particular embodiments, the wet food comprises a chunk form, more particularly of chunks in gravy form. Preferably, the wet food is selected from comprises chunks and gravy, chunks in jelly, loaf, mousse, terrine and bites form. "Chunks and gravy" products comprise a preformed meat particle prepared by making a meat emulsion and by putting this meat emulsion through a muzzle under pressure and then cooked. A product, such as cooked meat, is diced into chunks, which are eventually mixed with a gravy or sauce (which may be an aqueous sauce comprising a thickener and optionally one or more flavourants or an oil-based sauce optionally comprising flavourants). The two components are then filled into the package, which is seamed or sealed and sterilized. As opposed to the ground loaf, chunk and gravy compositions have physically separated, discrete chunks (i.e., pieces of ground meat and grains) as prepared. These discrete particles are present in the gravy-type liquid in the final container. When serving, chunk and gravy products flow out of the packaging and can be easily mixed with other dry products. While the chunk and gravy products allow better integrity of the individual ingredients, the heterogeneous formulation of the chunk and gravy products are sometimes disfavored by consumers.

As used herein, the term "dry food" or "dry food composition" generally refers to a food or composition having a moisture content of less than about 12% by weight, relative to the total weight of the food composition, and commonly even less than about 7% by weight, relative to the total weight of the food composition. In particular embodiments, dry food according to the presently disclosed subject matter has a moisture content of at most about 12% by weight. In some embodiments, the said dry food has a moisture content of about 7% or less, such as about 5% by weight.

In particular embodiments, the dry food has a moisture content of more than about 3% by weight, relative to the total weight of the food composition. In certain embodiments, the dry food comprises a kibble. In non-limiting examples, a kibble include particulates; pellets; pieces of pet food, dehydrated meat, meat analogue, vegetables, and combinations thereof; and pet snacks, such as meat or vegetable jerky, rawhide, and biscuits. The dry food composition can be manufactured by mixing together ingredients and kneading in order to make consistent dough that can be cooked. In general, it can be the final product of a process comprising an extrusion step followed by a drying step.

The process of creating a dry food is usually done by baking and/or extruding. The dough is typically fed into a machine called an expander and/or extruder, which uses pressurized steam or hot water to cook the ingredients. While inside the extruder, the dough is under extreme pressure and high temperatures. The dough is then pushed through a die (specifically sized and shaped hole) and then cut off using a knife. The puffed dough pieces are made into kibble by passing it through a dryer so that moisture is dropped down to a defined target ensuring stability of the food until consumption. The kibble can then be sprayed with fats, oils, minerals, vitamins, the natural extracts cocktail and optionally sealed into packages. The dry food composition is preferably packaged, preferably as described herein. In this way, the consumer is able to identify, from the packaging, the ingredients in the food product and confirm that it is suitable for the particular pet, e.g., dog, in question. The packaging can be metal, plastic, paper or card, but is preferably as described herein.

As used herein, the term "semi-moist food" or "semi-moist food composition" generally refers to a food composition with an intermediate moisture content of about 12% to about 30% in weight, relative to the total weight of the food composition. Hence, such semi-moist food composition is generally the final product of a process allowing a moisture content value that is intermediate between a dry food and a wet food. In some embodiments, the said process can comprise a step of adding a humectant agent. In some embodiments, the said process comprises an extrusion step and a subsequent treatment step with Super-Heated Stream (SHS). In some embodiments, the semi-moist food according to the presently disclosed subject matter containing more than about 12% and at most about 30% moisture by weight, relative to the total weight of the food composition. Illustratively, a semi-moist food composition has about 11% to about 20% moisture by weight, relative to the total weight of the food composition, and/or a water activity of about 0.64 to about 0.75, preferably both.

The food is preferably petfood. The term "pet food" as used herein refers to a food composition designed for ingestion by non-human mammal. Non-human mammals encompass feline animals and canine animals, including pets such as feline pets and canine pets like cats and dogs.

The petfood is preferably a wet food composition or a semi-moist food composition. The petfood may be an animal-derived product or a meat-analogue produce or comprise a mixture of animal-derived product and meat-analogue product. "Animal-derived product" refers to an edible portion of an animal material that includes animal protein. The animal-derived product may comprise meat. Meat may be defined as the flesh of an animal, typically muscle or protein derived from muscle. The animal material may be cooked or uncooked before placement into the packaging. The animal material may be cooked as part of a heat sterilization process that may form part of the method of the present disclosure, preferably after sealing the package. An animal-derived product may be, for example, chicken-derived product powder (i.e. powdered chicken parts) or fish-derived product frozen (i.e. frozen parts from fish).

"Meat analogue" refers to non-animal proteins that resemble meat protein (animal-derived product protein) in one or more of taste, texture and aroma. Examples of non-animal protein that can produce a meat analogue, include vegetable proteins, algal proteins, microbial proteins.

The animal-derived product (animal material) that may be used in the present method may comprise animal-derived products (e.g. meat) fit for human consumption and/or animal by-products. The animal material may suitably contain at least 50 wt.%, more preferably at least 70 wt.% and most preferably at least 85 wt.% of animal by-products and/or meat. Animal by-products are the entire bodies or parts of animals or products of animal origin not intended for human consumption, including ova, embryos and sperm. Examples of animal by-products include, but are not limited to:
- parts of slaughtered animals which are rejected as unfit for human consumption but not affected by any sign of a communicable disease;
- hides and skins, hooves and horns, pig bristles and feathers, e.g. originating from animals that are slaughtered in a slaughterhouse and may have been declared fit for human consumption;
- blood obtained from animals, which may have been declared fit for human consumption;
- animal by-products derived from the production of products, which may have been intended for human consumption, including degreased bones and greaves;
- former foodstuffs of animal origin which are no longer intended for human consumption but not meeting a producer's specification or due to problems of manufacturing or packaging defects;
- raw milk originating from animals that do not show any signs of a communicable disease;
- fish or other sea animals, except sea mammals, caught in the open sea for the purpose of fishmeal production, and fresh by-products from fish from plants manufacturing fish products for human consumption;
- shells of eggs originating from animals that do not show any signs of a communicable disease;
- blood, hides and skins, hooves, feathers, wool, horns, hair and fur originating from healthy animals;
- animal digests derived from animal tissues, including cold-blooded marine animals, excluding hair, horns, teeth, hooves, and feathers.

### Packaging

The packaging may be any suitable packaging material used for food storage. The packaging may be made from multi-materials or mono-materials. The packaging is preferably made from mono-materials.

The multi-material may be a laminate which comprises multiple layers of different materials. In some embodiments, the packaging material is a multi-material that comprises 2 layers, optionally 3 layers, optionally 4 layers, optionally 5 or more layers. In some embodiments, each layer of the multi-material comprises a different material. Food packaging commonly comprises multiple layers of different materials, each of which serves a different purpose. For example, PET/AI/PP is a multi-material laminate which comprises a PET (poly(ethylene terephthalate)) outer layer, aluminium foil middle layer, and a PP (polypropylene) inner layer. The role of the PET layer includes, but is not limited to, contributing to mechanical robustness of the packaging, providing heat resistance, and also serving as a printing surface. The aluminium layer provides, for example, protection to the product inside to heat, light and oxygen. Finally, the inner PP layer is typically employed as it melts upon heating in order to seal packages. Due to the composition of multi-materials, typically only the inner layer will melt when sealing the package. Furthermore, as the outer layers often have a higher melting point than the inner layer, elevated temperatures can be employed during sealing without impacting the appearance of the outside of the package.

The multi-material may comprise multiple layers, wherein the layers comprise one or more materials selected from PET, oriented polypropylene (OPP), bi-oriented polyethylene terephthalate (BOPET), bi-oriented polypropylene (BOPP), oriented polyamide (OPA), high density polyethylene (HDPE), medium-density polyethylene (MDPE), linear low-density polyethylene (LLDPE), polyethylene (PE), polypropylene, aluminium, polyvinylidene chloride (PVDC), ethylene vinyl alcohol (EVOH), polyamide (PA), mono-oriented-polyethylene (MDO-PE), mono-oriented-polypropylene (MDO-PP), and cast polypropylene (CPP).

The multi-material may comprise an outer layer made from a polymer selected from PET, bi-oriented polyethylene terephthalate (BOPET), bi-oriented polypropylene (BOPP), oriented polyamide (OPA) and high density polyethylene (HDPE).

The multi-material may comprise an inner layer made from a material selected from polyethylene (PE) or polypropylene.

The multi-material may comprise an aluminium layer. The multi-material may comprise a layer comprising a polymer selected from polyvinylidene chloride (PVDC), ethylene vinyl alcohol (EVOH), polyamide (PA), medium-density polyethylene (MDPE), and linear low-density polyethylene (LLDPE). The multi-material may comprise adhesive. The adhesive may be between the layers of the multi-material.

In some embodiments, the packaging may be a mono-material. Mono-materials are made from a single type of material and are therefore recycled more readily. The packaging may be a polymer mono-material. The mono-material packaging may be a mono-material laminate. Mono-material laminates comprise multiple layers which are made from a single type of material. The mono-material laminate may comprise multiple layers of the same material. The mono-material packaging may comprise one layer, optionally two layers, optionally three layers, optionally 4 layers, optionally 5 or more layers. The mono-material laminate may comprise different layers which are made from the same type of material. For example, the mono-material laminate may be a PP mono-material which comprises a PP layer and a mono-oriented-polypropylene (MDO-PP) layer.

The packaging may be a mono-material selected from a PP mono-material and a PE mono-material. The packaging may be a mono-material comprising a single layer of PP or a single layer of PE. The packaging may be a PP mono-material comprising materials selected from PP, OPP, MDO-PP, BOPP, and CPP. The packaging may be a PE mono-material comprising a material selected from PE, oriented polyethylene (OPE), mono-oriented-polyethylene (MDO-PE) , BOPE, and CPE. The packaging may be a mono-polyolefin mono-material. A mono-polyolefin mono-material may comprise a mixture of PP and PE. Mono-polyolefin materials are still classed as mono-materials.

Although made from a single type of material, mono-materials may further comprise additives to impart additional properties to the material, without effecting its ability to be recycled. For example, the mono-material may further comprise EVOH. The mono-materials may comprise metallised materials. The mono-material may be a PP mono-material which comprises metallised PP. The mono-material may be a PE mono-material which comprises metallised PE. In some embodiments, the mono-material packaging comprises an adhesive. The adhesive may be present in between layers of the mono-material.

The packaging may be a mono-material which comprises an additive selected from EVOH, PVDC, a silicon oxide (SiOₓ) and an aluminium oxide (AlOₓ). The packaging may be a mono-material laminate which comprises a coating on the outer layer of the packaging. The packaging may be a mono-material laminate with a vapour deposition layer on the outer layer of the packaging (i.e., the outer layer has been coated with a further layer of material by vapour deposition). The packaging may be a mono-material laminate coated with a material selection from EVOH, PVDC, SiOₓ and AlOₓ. The coating is preferably selected from SiOₓ and AlOₓ. This coating assists in providing a barrier to the packaging which protects the product from materials (such as air) and light.

Due to the composition of mono-material packaging, the inventors found that lower temperatures are often required during sealing to ensure that the outside of the package does not melt, or deform unfavourably (for example, shrink or crumble). Melting of the outside walls of the packaging may result in visually displeasing packages. The inventors found that microchannels were more likely to form when sealing was conducted on mono-material packages due to the decreased sealing temperature. However, it was found that the method of the present disclosure was able to provide seals with improved integrity for both mixed material packaging and mono-material packaging. Although the present invention is able to improve seal integrity for both multi-material packages and mono-material packages, it is best suited for use with mono-materials where elevated temperatures cannot be used to achieve tight seals without deforming the outside of the package.

The walls of the packaging may have a thickness of from about 1 µm to about 500 µm, optionally from about 5 µm to about 300 µm, optionally from about 10 µm to about 200 µm, optionally from about 20 µm to about 175 µm, optionally from about 30 µm to about 150 µm, optionally from about 50 µm to about 130 µm, optionally from about 70 µm to about 115 µm, optionally from about 90 µm to about 105 µm.

In some embodiments, the walls of the packaging may have a thickness of no greater than about 500 µm, optionally no greater than about 400 µm, optionally no greater than about 300 µm, optionally no greater than about 250 µm, optionally no greater than about 200 µm, optionally no greater than about 150 µm, optionally no greater than about 100 µm.

In some embodiments, the walls of the packaging may have a thickness of at least about 0.1 µm, optionally at least about 1 µm, optionally at least about 2 µm, optionally at least about 5 µm, optionally at least about 8 µm, optionally at least about 10 µm, optionally at least about 15 µm, optionally at least about 20 µm, optionally at least about 30 µm, optionally at least about 40 µm.

In some embodiments, the packaging may be comprised of a laminate material which comprises multiple layers, wherein the individual layers have a thickness of from about 1 µm to about 100 µm, optionally from about 5 µm to about 90 µm, optionally from about 5 µm to about 90 µm, optionally from about 10 µm to about 80 µm, optionally from about 20 µm to about 70 µm. The packaging may comprise of a laminate material which comprises 1, 2 or 3 layers.

The package is preferably a pouch. The term "pouch" herein refers to a container formed substantially or completely of a flexible sheet material. The sheet material normally comprises at least one continuous layer of plastic, e.g. thermoplastic, film, or it may be a laminated sheet made up of more than one plastic, e.g. thermoplastic, film layer. The plastic may be a multimaterial plastic or a monomaterial plastic, e.g. comprising one or more of the polymers mentioned above. At least a portion of the sheet material may be transparent to allow inspection of the pouch contents. The sheet material is preferably substantially impermeable to liquids, and it is normally also substantially impermeable to gases such as oxygen. The sheet material making up the pouch may further comprise a metal layer, such as an aluminium layer, to render the material substance-and light-impermeable and to provide aesthetic effects.

The method disclosed herein involves providing a packaging containing food, the packaging having an opening formed from two opposing walls, and the other sides of the packaging may already have been fused and sealed together. For example, the pouch may be generally rectangular in shape, when viewed from the side of one of the walls, and, at the start of the method described herein, three of the four sides of the package have already been fused and sealed, with the remaining fourth side having the opening, which is then fused and sealed as described in the method.

The package preferably consists of or consists essentially of the flexible sheet material. The package may, for example, be a so-called pillow pouch, typically formed by continuous form-fill-seal equipment, or it may be formed by bonding together front and back faces of flexible sheet materials around their marginal edges. In certain embodiments, the pouch may be a stand-up pouch. That is to say, a pouch formed by bonding together front and back faces of sheet material around three edges, with a gusset sheet inserted and bonded to the respective fourth edges of the front and back sheets to form a base for the pouch. In an embodiment, the pouch may be an elongated pouch having flexible walls, with the pouch being openable at one end, to allow the rest of the pouch to be squeezed to dispense the petfood from the open end. The total thickness of each flexible wall of the pouch is suitably in the range of from 50 micrometers to 1000 micrometers, for example 100 micrometers to 500 micrometers.

The package may be provided with a nip and/or a line of weakness and/or a tear strip to allow the package to be opened after filling. The package may contain from about 8 g to about 500 g of the petfood, optionally from 50 g to 300 g of the petfood, optionally from 50 g to 150 g of the petfood.

### Heat sealing members

According to the present disclosure, the packaging has an opening formed from two opposing walls. These walls are compressed together with opposing heat sealing members to close the opening and fuse the walls together to form a first heat-sealed portion of the packaging. By compressing the opposing walls together, the inside of walls of the packaging melt, fusing together to form the first heat-seal portion.

In some embodiments, the heat sealing members have a flat surface and this is the surface that compresses the opposing walls of the packaging, thereby closing the opening and fusing the walls together to form a first heat-sealed portion of the packaging. Where "surface" of the heat-sealing member is referred to here, unless otherwise stated, this refers to the surface that contacts and compresses the walls the package together to fuse and seal the opening. If the surface of the heat sealing members is not flat, there is risk that the outer layer of the package is deformed when compressing at elevated temperatures. In some embodiments, the opposing walls of the packaging are compressed together with flat surfaces of opposing heat sealing members. By compressing the opposing walls of the packaging together with two heated flat surfaces, the first heat-sealed portion of the packaging is a flat, unembossed seal. In some embodiments, the first heat-sealed portion extends across the entire length of the opening of the package. In some embodiments, the first heat-sealed portion is a flat seal which extends across the entire length of the opening of the package. In some embodiments, the heat sealing members compress the opposing walls of the packaging across the entire opening such that the opening is fully sealed.

In some embodiments, one or both of the opposing heat sealing members are heated to a temperature of at least about 100 °C, optionally at least about 110 °C, optionally at least about 120 °C, optionally at least about 130 °C, optionally at least about 140 °C, optionally at least about 150 °C, optionally at least about 160 °C.

In some embodiments, one or both of the opposing heat sealing members are heated to a temperature of no greater than about 250 °C, optionally no greater than about 240 °C, optionally no greater than about 230 °C, optionally no greater than about 220 °C, optionally no greater than about 210 °C, optionally no greater than about 200 °C, optionally no greater than about 190 °C, optionally no greater than about 180 °C, optionally no greater than about 170 °C, optionally no greater than about 165 °C.

In some embodiments, one or both of the opposing heat sealing members are heated to a temperature of from about 90 °C to about 275 °C, optionally from about 95 °C to about 265 °C, optionally from about 100 °C to about 255 °C, optionally from about 105 °C to about 235 °C, optionally from about 110 °C to about 215 °C, optionally from about 115 °C to about 205 °C, optionally from about 125 °C to about 195 °C, optionally from about 135 °C to about 185 °C, optionally from about 145 °C to about 180 °C, optionally from about 155 °C to about 175 °C.

In some embodiments, the packaging is a mono-material and one or both of the opposing heat sealing members are heated to a temperature of no greater than about 170 °C.

In some embodiments, the packaging is a multi-material and one or both of the opposing heat sealing members are heated to a temperature of no greater than about 250 °C.

In some embodiments, the opposing walls of the packaging are compressed together between the opposing heat sealing members at a force of at least about 100 N, optionally at least about 150 N, optionally at least about 200 N, optionally at least about 250 N, optionally at least about 300 N, optionally at least about 350 N, optionally at least about 400 N, optionally at least about 450 N.

In some embodiments, the opposing walls of the packaging are compressed together between the opposing heat sealing members at a force of from about 100 N to about 1000 N, optionally from about 125 N to about 925 N, optionally from about 175 N to about 875 N, optionally from about 225 N to about 825 N, optionally from about 300 N to about 700 N, optionally from about 375 N to about 625 N, optionally from about 400 N to about 600 N, optionally from about 450 N to about 550 N.

In some embodiments, the opposing walls of the packaging are compressed together between the opposing heat sealing members for at least about 0.05 seconds, optionally at least about 0.1 seconds, optionally at least about 0.15 seconds, optionally at least about 0.2 sections, optionally at least about 0.25 seconds, optionally at least about 0.3 seconds.

In some embodiments, the opposing walls of the packaging are compressed together between the opposing heat sealing members for no greater than about 1 seconds, optionally no greater than about 0.9 seconds, optionally no greater than about 0.8 seconds, optionally no greater than about 0.7 seconds, optionally no greater than about 0.6 seconds, optionally no greater than about 0.5 seconds, optionally no greater than about 0.4 seconds, optionally no greater than about 0.3 seconds.

In some embodiments, the opposing walls of the packaging are compressed together between the opposing heat sealing members for from about 0.05 seconds to about 1 second, optionally from about 0.075 seconds to about 0.8 seconds, optionally from about 0.1 seconds to about 0.75 seconds, optionally from about 0.125 seconds to about 0.7 seconds, optionally from about 0.175 seconds to about 0.65 seconds, optionally from about 0.2 seconds to about 0.5 seconds, optionally from about 0.225 seconds to about 0.45 seconds, optionally from about 0.25 seconds to about 0.35 seconds.

In some embodiments, the first heat-sealed portion is formed using two sets of opposing heat sealing members. The two sets of opposing heat sealing members may be a first set of opposing heat sealing members and a second set of opposing heat sealing members. In some embodiments, the opposing walls of the packaging are compressed together with a first set of opposing heat sealing members, followed by with a second set of opposing heat sealing members, thereby closing the opening and fusing the walls together to form a first heat-sealed portion of the packaging. In some embodiments, the second set of opposing heat sealing members compresses the portion of the packaging that was compressed by the first set of opposing heat sealing members. In some embodiments, after compressing the opposing walls of the packaging together with the first set opposing heat sealing members, the opposing walls of the packaging are compressed with a second set of opposing heat sealing members, thereby closing the opening and fusing the walls together to form a first heat-sealed portion of the packaging. In some embodiments, the width of the flat portion of the first heat sealing members, the width corresponding to a direction perpendicular from the edge of the packaging, is less than the width of the flat portion of the second heat sealing members. In some embodiments, the flat portion of the first heat sealing member generally corresponds in shape and size to the flat portion of the cooling sealing member, as described below, e.g. able to form a heat-sealed line across the first-heat-sealed portion of the packaging, which will correspond to a line formed by the flat portion of the cooling sealing member. The width of the flat surface of the first heat-sealing member may be less than the width of the flat surface of the second heat-sealing member and may be the same as or greater than the width of the flat portion of the cooling sealing member.

In some embodiments, both the first set of opposing heat sealing members and the second set of opposing heat sealing members have flat surfaces. In some embodiments, the first set of opposing heat sealing members have C-shaped surfaces, when viewed in cross-section (i.e. along the plane of the walls of the packaging being sealed), i.e. in other words, the first set of opposing heat-sealing members may have an upper flat portion and an lower flat portion (the upper flat portion being disposed closer to the edge of the packaging than the lower flat portion), wherein, in the method the lower flat portion contacts and compresses the walls of the packaging together, and optionally the upper flat portion also contacts and compresses the walls of the packaging together. In some embodiments, the second set of opposing heat sealing members have uniform flat surfaces.

In some embodiments the first set of opposing heat sealing members are heated to the same temperature as the second set of opposing heat sealing members. In some embodiments, the first set of opposing heat sealing members are heated to a higher temperature than the second set of opposing heat sealing members. In some embodiments, the second set of opposing heat sealing members are heated to a higher temperature than the first set of opposing heat sealing members.

### Cooling sealing members

According to the present disclosure, the first heat-sealed portion of the packaging is compressed with opposing cooling sealing members. At least one of the cooling sealing members has a surface, wherein a first portion is a patterned surface comprising peaks and/or troughs, and a second portion is flat and extends across at least a portion of the first heat-sealed portion of the packaging and corresponds to a flat section of the opposing cooling sealing member. The "surface" of the cooling sealing member(s), unless otherwise stated, refers to the surface of the cooling member(s) that contacts and compresses the first heat-sealed portion of the packaging. "Patterned" indicates that the surface has peaks and/or troughs relative to the plane of the surface of the cooling sealing member that contacts the packaging, i.e. is not flat. In some embodiments, the opposing cooling sealing members have the same surface pattern. In some embodiments, the surface pattern of each cooling sealing member corresponds to the surface pattern of the opposing cooling sealing member (i.e., the flat portions correspond to flat portions and the patterned portions correspond to patterned portions).

"Correspond to" in the present context indicates that the relevant portions are aligned and compressed together in the method (e.g. if the flat portion of one cooling sealing member corresponds to a flat portion of the other cooling sealing member, this indicates that the flat portions are aligned and compress the packaging, such that on both sides of the compressed packaging, the surface of the packaging contacted by the flat portion of the cooling sealing members is flat; and if the patterned portion of one cooling sealing member corresponds to a patterned portion of the other cooling sealing member, this indicates that the patterned portions are aligned and compress the packaging, such that on both sides of the compressed packaging contacted by the patterned portion of the cooling sealing member, the surface of the packaging is a negative pattern of pattern on the cooling sealing members, i.e. the peaks from the cooling sealing members forming indents on the packaging).

The first portion which is a patterned surface increases the surface area while cooling. This accelerates the removal of heat from the warm seal (i.e., increases cooling efficiency). If not cooled after compressing between heat sealing members, there is an increased risk of the packaging deforming while warm in subsequent operations, resulting in undesirable packages. The packaging is preferably only compressed between a patterned surface on the cooling sealing members as compressing between a patterned surface at elevated temperatures is likely to result in a deformed package. In other words, the heat sealing members may not comprise a patterned surface comprising peaks and/or troughs.

In some embodiments the first portion of the surface of the cooling sealing member is a patterned surface comprising an array of peaks and/or troughs. The array of peaks and/or troughs may be a 2-dimensional array on the surface of the cooling sealing member. The 2-dimensional array may be such that the peaks and/or troughs exhibit a 2-dimensional periodicity across the surface of the cooling sealing member. The 2-dimensionl periodicity may be a periodicity along two axes which are at an angle, e.g. perpendicular, to one another. In other words, the array of peaks and/or troughs may be arranged in a regular, grid-like configuration (e.g., having rows and columns). For example, the troughs may be formed from an array of a first set of parallel straight-line indentations, and a second set of parallel straight-line indentations, which crossing the first set of parallel straight-line indentations, and the peaks are formed by the areas between the crossing sets of indentations. The array of a first set of parallel straight-line indentations and array of second set of parallel straight-line indentations are at an angle to one another and the angle may be from 30 to 120 degrees, e.g. 70 to 100 degrees, e.g. 90 degrees. In an embodiment, the cooling sealing members may be rectangular, when viewed perpendicular to the surface that contacts the packaging, and the first set of parallel straight-line indentations are parallel to one edge (say a 'first edge') of the cooling sealing members, and the second set of parallel straight-line indentations are set at 90 degrees to the first set of parallel straight-line indentations (so therefore parallel to an edge that is 90 degrees to the first edge of the sealing member). In an embodiment, the cooling sealing members may be rectangular, when viewed perpendicular to the surface that contacts the packaging, and optionally neither the first set or second set of parallel straight-line indentations are parallel to any edge (say a 'first edge') of the cooling sealing members, e.g. and may be disposed at an angle of 30 to 60 degrees, e.g. about 45 degrees, relative to an edge. e.g. a longest edge of the cooling sealing member.

In some embodiments, the 2-dimensional periodicity is exhibited along two axes which are not perpendicular to each other. In this embodiment, adjacent peaks and/or troughs may, for example, be aligned in columns, but no longer in rows.

The peaks and/or troughs may be arranged in a grid-like configuration such that adjacent peaks are substantially aligned in rows along each of the edges (the length and width) of the cooling sealing member and/or adjacent troughs are substantially aligned along each of the edges of the cooling sealing member. "Edges" in this context are the edges of the surface of the cooling sealing members, i.e. the surface that contacts the packaging. In other words, the rows and columns of peaks and/or troughs of the grid-like configuration may run substantially parallel to the edges of the cooling sealing member.

The grid-like array may be such that troughs and/or rows of peaks may be disposed at an angle to an edge of the cooling sealing member (e.g. the longest edge of the cooling sealing member and/or the shortest edge of the cooling sealing member) such that adjacent peaks do not run parallel to the edge of the cooling sealing member and/or adjacent troughs do not run parallel to said edge of the cooling sealing member. In other words, the troughs and/or rows of peaks of the grid-like configuration may run at an angle to the edge of the cooling sealing member, wherein the angle is not 90 ° or 180 °. For example, the angle of the troughs and/or rows of peaks may be at an angle of from 30 degrees to 60 degrees, e.g. about 40 to 50 degrees, e.g. about 45 degrees to an edge of the cooling sealing member, which may be the longest edge of the cooling sealing member.

The patterned surface of the cooling sealing member comprising peaks and/or troughs may be a knurled pattern. While knurled patterns are commonly present on curved surfaces, they can also be formed on flat surfaces, e.g. on a flat surface of a substrate that, once knurled (i.e. having an array of crossing straight-line indentations formed in the surface), then forms the cooling sealing member as described herein.

The patterned surface of the cooling sealing member comprising peaks and/or troughs may be a random pattern of peaks and/or troughs. The pattern of the peaks and/or troughs may be random.

In some embodiments, the patterned surface may have a peak density of at least about 0.5 peaks per mm², optionally at least about 0.75 peaks per mm², optionally at least about 1 peaks per mm², optionally at least about 1.5 peaks per mm². For example, the patterned surface may have a peak density such that 100 peaks are found in an area of about 60 mm² (i.e., a peak density of about 1.67 peaks per mm²).

In some embodiments, the patterned surface may have a peak density of no greater than about 5 peaks per mm², optionally no greater than about 4 peaks per mm², optionally no greater than about 3.5 peaks per mm², optionally no greater than about 2.75 peaks per mm², optionally no greater than about 2.25 peaks per mm², optionally no greater than about 2 peaks per mm².

In some embodiments, the patterned surface may have a peak density of from about 0.5 peaks per mm² to about 5 peaks per mm², optionally from about 0.6 peaks per mm² to about 4.5 peaks per mm², optionally from about 0.8 peaks per mm² to about 4 peaks per mm², optionally from about 0.9 peaks per mm² to about 3 peaks per mm², optionally from about 1.2 peaks per mm² to about 2.5 peaks per mm², optionally from about 1.3 peaks per mm² to about 2 peaks per mm².

The patterned surface may comprise an array of projections and/or recesses. The patterned surface may comprise a plurality of projections and/or recesses. The projections and/or recesses may create the peaks and/or troughs of the patterned surface. The recesses may be formed between adjacent projections. The troughs may be formed between adjacent peaks.

The projections may extend from the surface of the cooling sealing member. The projections may be tapered in cross section, such that their width may decrease with distance from the surface of the cooling sealing member. The patterned portion of the cooling sealing member may comprise a plurality of projections. The projections may have a shape selected from square-based pyramid, quadrilateral-based pyramid, triangle-based pyramid, circle-based pyramid, cone, and frustum. Each peak or projection may create a point-like indentation in the packaging.

The projections and/or peaks may comprise a tip (i.e., the most distal portion of the projection and/or peak from the surface of the cooling sealing member). The tips may have a flat or rounded surface, preferably a flat surface. The rounded surface may be a dome shaped surface. The tips may have a flat square-shaped surface, optionally a flat quadrilateral-shaped surface, optionally a flat triangle-shaped surface, optionally a flat circular-shaped surface. The recesses and/or troughs may have a flat or rounded surface.

In some embodiments, the pitch of the peaks and/or troughs is from about 0.1 mm to about 3 mm, optionally from about 0.2 mm to about 2.5 mm, optionally from about 0.3 mm to about 2.2 mm, optionally from about 0.4 mm to about 2 mm, optionally from about 0.5 mm to about 1.6 mm, optionally from about 0.6 mm to about 1.5 mm, optionally from about 0.8 mm to about 1.2 mm. The pitch may be defined as the distance from the depth of the troughs to the height of the peaks.

The shortest distance from adjacent peaks and/or troughs may be from about 0.01 mm to about 3 mm, optionally from about 0.1 mm to about 2.5 mm, optionally from about 0.2 mm to about 2.2 mm, optionally from about 0.3 mm to about 2 mm, optionally from about 0.5 mm to about 1.6 mm, optionally from about 0.6 mm to about 1.5 mm, optionally from about 0.8 mm to about 1.2 mm. In some embodiments, the separation between adjacent peaks and/or troughs is equal.

In some embodiments, the opposing cooling sealing members are aligned such that when the first heat-sealed portion of the packaging is compressed, the peaks on the first portion of the surface of the cooling sealing member do not correspond to the troughs on the first portion of the surface of the opposing cooling sealing member.

In some embodiments, the opposing cooling sealing members are a first cooling sealing member and a second cooling sealing member. In some embodiments, both cooling sealing members have a first portion which is a patterned surface comprising peaks and/or troughs. The first portion of the first cooling sealing member which is patterned may correspond to the first portion which is patterned of the opposing second cooling sealing member. In some embodiments, the peaks of the patterned surface of the first cooling sealing member do not correspond to the troughs of the second cooling sealing member. In other words, the peaks of the first cooling sealing member are not received by the troughs of the opposing second cooling sealing member when the first heat-sealed portion of the packaging is compressed with the opposing cooling sealing members.

In some embodiments, the peaks of the patterned surface of the first cooling sealing member correspond to the peaks of the second cooling sealing member. The troughs of the patterned surface of the first cooling sealing member may correspond to the troughs of the second cooling sealing member. At least some of the peaks of the patterned surface of the first cooling sealing member may correspond to some of the peaks of the second cooling sealing member. At least some of the troughs of the patterned surface of the first cooling sealing member may correspond to some of the troughs of the second cooling sealing member. The patterned surface on the opposing cooling sealing members may be aligned such that peak corresponds to peak and/or trough corresponds to trough. The opposing cooling sealing members may be aligned such that peaks do not correspond to troughs. As a result, when the first heat-sealed portion of the packaging is compressed with the opposing cooling sealing members, there is an increased pressure in areas where peaks correspond to peaks and reduced pressure in areas where troughs meet troughs. The areas of reduced pressure (i.e., channels in areas where troughs meet troughs) provide space for contamination to be displaced to.

In some embodiments, the second portion of the surface of the cooling sealing member is flat and extends, e.g. in a line, across at least a portion of the first heat-sealed portion of the packaging and corresponds to a flat section of the opposing cooling sealing member. In some embodiments, at least a portion of the first heat-sealed portion of the packaging is compressed between flat portions of opposing cooling sealing members. In some embodiments, flat means that there is substantially no peaks and/or troughs. In other words, the flat surface is level with no raised portions. In some embodiments, the second portion of the surface of the cooling sealing member is flat and extends in a line across at least a portion of the first heat-sealed portion of the packaging, with this line running along the whole of the first heat-sealed portion and corresponds to a flat section of the opposing cooling sealing member.

Without wishing to be bound to a particular theory, the pressure exerted on the portion of the first heat-sealed portion of the packaging while it is compressed between the flat sections of opposing cooling sealing members is raised, helping to displace contamination within the seal. The uniform pressure in this portion of the packaging also interrupts microchannels. The microchannels typically form in areas of reduced pressure, such as the grooves that form between the troughs on the surfaces of the two patterned portions of the opposing cooling sealing members. It is believed that when the first heat-sealed portion of the packaging is compressed between the flat sections of the opposing cooling sealing members, any contamination is forced out into areas of lower pressure in the patterned surface, interrupting microchannel formation.

In some embodiments, the second portion which is flat extends across a portion of the first heat-sealed portion of the packaging. The second portion which is flat may extend across a portion of the length of the first heat-sealed portion of the packaging, optionally wherein it does not extend across the centre of the first heat-sealed portion of the packaging. The second portion which is flat may extend across the entire length of the first heat-sealed portion of the packaging. The entire length means that the second portion which is flat extends substantially from one edge of the first heat-sealed portion to the opposing edge of the first heat-sealed portion. The second portion which is flat may extend across the outer edges of the first heat-sealed portion of the packaging. The inventors found that the outer edges (i.e., the corners) of the seal are more prone to forming microchannels. Accordingly, it is preferable that the flat portion of the cooling sealing member extends over the outer edges of the first heat-sealed portion of the packaging.

In some embodiments, the second portion of the cooling sealing member (i.e., the flat portion of the cooling sealing member) compresses at least a portion of the first heat-sealed portion of the packaging, preferably at least of a portion of the first heat-sealed portion which was compressed by flat surfaces of the heat-sealing members. In some embodiments, the second portion of the cooling sealing member compresses the entire length of the first heat-sealed portion of the packaging, with the length being a direction parallel to an edge of the packaging closest to the first heat-sealed portion.

In some embodiments, the second portion of the surface of the cooling sealing member which is flat has a width of no greater than about 6 mm, optionally no greater than about 5 mm, optionally no greater than about 4 mm, optionally no greater than about 3 mm, optionally no greater than about 2.5 mm. "Width" of the second portion of the surface of the cooling sealing member in this context is measured in a direction perpendicular to a longest edge of the cooling sealing member.

In some embodiments, the second portion of the surface of the cooling sealing member which is flat has a width of at least about 0.5 mm, optionally at least about 0.8 mm, optionally at least about 1 mm, optionally at least about 1.2 mm, optionally at least about 1.5 mm, optionally at least about 2 mm.

In some embodiments, the second portion of the surface of the cooling sealing member which is flat and has a width of from about 0.1 mm to about 6 mm, optionally from about 0.3 mm to about 5 mm, optionally from about 0.6 mm to about 4.5 mm, optionally from about 0.9 mm to about 4 mm, optionally from about 1.3 mm to about 3.5 mm, optionally from about 1.6 mm to about 3.2 mm, optionally from about 1.8 mm to about 3.1 mm, optionally from about 2 mm to about 3 mm, optionally from about 2.2 mm to about 2.8 mm, optionally from about 2.2 mm to about 2.6 mm.

In some embodiments, the width of the first heat-sealed portion is from about 3 mm to about 40 mm, optionally 4 mm to about 20 mm, optionally from about 4.5 mm to about 18 mm, optionally from about 5 mm to about 16 mm, optionally from about 5.5 mm to about 14 mm, optionally from about 6 mm to about 11 mm, optionally from about 6.5 mm to about 10 mm, optionally from about 7 mm to about 9 mm.

In some embodiments, the width of the cooling sealing member (i.e., the combined width of the first portion and the second portion) is from about 3 mm to about 40 mm, optionally from about 4 mm to about 20 mm, optionally from about 4.5 mm to about 18 mm, optionally from about 5 mm to about 16 mm, optionally from about 5.5 mm to about 14 mm, optionally from about 6 mm to about 11 mm, optionally from about 6.5 mm to about 10 mm, optionally from about 7 mm to about 9 mm.

The inventors found that by compressing a portion of the first heal-sealed portion with opposing cooling sealing tools comprising a narrow flat portion, microchannels could be disrupted. If the flat portion of the cooling sealing members is too wide, the contamination may not be displaced and the seal may fail.

In some embodiments, the second portion of the surface of the cooling sealing member may be line, e.g. a flat line. The line may be a straight line, bent line, curved line, or a tortuous line (i.e. a line that changes direction a plurality of times). The line may be a number of connected straight lines at different angles. The line may be interrupted by the first portion of the surface of the cooling sealing member (i.e., a number of disconnected lines). The line may extend along a longest edge of the cooling sealing member and, in the packaging, along an edge of the packaging closest to the first heat sealed portion of the packaging.

In some embodiments, the second portion of the surface of the cooling sealing member is disposed between two patterned portions of the surface of the cooling sealing member. In some embodiments, at least one of the cooling sealing members has a surface which is patterned comprising peaks and/or troughs, where the patterned surface is interrupted by a flat portion which extends across at least a portion of the first heat-sealed portion of the packaging and corresponds to a flat section of the opposing cooling sealing member.

In some embodiments, at least one of the cooling sealing members has a surface, wherein a first portion is a patterned surface comprising peaks and/or troughs, a second portion is flat and extends across at least a portion of the first heat-sealed portion of the packaging and corresponds to a flat section of the opposing cooling sealing member, and a third portion is a patterned surface comprising peaks and/or troughs. The patterned surface of the third portion may be the same as the patterned surface of the first portion. The patterned surface of the third portion may be different to the patterned surface of the first portion. In some embodiments, the second portion is disposed between the first portion and the third portion. The inventors found that the increased pressure exerted by the flat portions of the cooling sealing members is able to displace contamination. This is further assisted by disposing the flat portion between two patterned portions, as this arrangement provides space for the contamination to be displaced on either side of the flat portion.

In some embodiments, both of the cooling sealing members have a surface, wherein a first portion is a patterned surface comprising peaks and/or troughs, and a second portion is flat and extends across at least a portion of the first heat-sealed portion of the packaging and corresponds to the flat section of the opposing cooling sealing member.

In some embodiments, both cooling sealing members have a second portion which is flat and extends across at least a portion of the first heat-sealed portion of the packaging. The second portion of the first cooling sealing member which is flat may correspond to the second portion which is flat of the opposing second cooling sealing member.

In some embodiments, at least one cooling sealing member has a second portion which is flat, wherein the second portion which is flat comprises at least one groove which runs along at least a portion of the length of the second portion of the cooling sealing member. The at least one groove results in a second portion which comprises valleys and flat surfaces that run in the direction of the length of the cooling sealing member. These flat surfaces may also be termed ridges in the flat portion. These ridges may increase the pressure exerted by the raised portions of the flat surface of the cooling sealing member when the first heat-sealed portion of the packaging is compressed with the opposing cooling sealing members. This increased pressure may assist in interrupting microchannels and also the valleys produced by the groove provide space for the contamination to be displaced to. Furthermore, the intensity of the pattern embossed on the surface of the packaging is normally limited by the force exerted on the packaging when compressed with opposing sealing members. By introducing a groove on one of the cooling sealing members, the pressure exerted on the packaging by the flat portion can be increased, resulting in a more prominent pattern.

In some embodiments, one cooling sealing member has a second portion which is flat and the opposing cooling sealing member has a corresponding second portion which is flat and comprises at least one groove which runs along at least a portion of the length of the second portion of the cooling sealing member. In some embodiments, the at least one groove runs along substantially the entire length of the second portion of the cooling sealing member.

In some embodiments, the second portion of the surface of the first cooling sealing member corresponds to the second portion of the surface of the opposing second cooling sealing member.

In some embodiments, the first portion of the surface of the first cooling sealing member corresponds to the first portion of the surface of the opposing second cooling sealing member.

In some embodiments, at least one of the cooling sealing members has a surface which has a shape, when viewed from a direction perpendicular to the plane of the surface, selected from quadrilateral, oval, and circular, preferably quadrilateral. The quadrilateral surface may be a surface shape selected from square, rectangle, parallelogram, trapezoid, rhombus, and rhomboid.

In some embodiments, one or both of the opposing cooling sealing members are at a temperature of no greater than about 60 °C, optionally no greater than about 50 °C, optionally no greater than about 40 °C, optionally no greater than about 30 °C, optionally no greater than about 25 °C, optionally no greater than about 23 °C, optionally no greater than about 20 °C, optionally no greater than about 18 °C, optionally no greater than about 16 °C, optionally no greater than about 15 °C, optionally no greater than about 14 °C, optionally no greater than about 13 °C, optionally no greater than about 12 °C.

In some embodiments, one or both of the opposing cooling sealing members are at a temperature of from about 1 °C to about 60 °C, optionally from about 2 °C to about 45 °C, optionally from about 2 °C to about 30 °C, optionally from about 2 °C to about 25 °C, optionally from about 4 °C to about 21 °C, optionally from about 6 °C to about 19 °C, optionally from about 7 °C to about 17 °C, optionally from about 8 °C to about 15 °C, optionally from about 9 °C to about 14 °C, optionally from about 10 °C to about 13 °C.

In some embodiments the opposing cooling sealing members are at a temperature greater than the dew point. If the cooling sealing members are below the dew point, condensation may form, affecting the sealing of the packaging.

In some embodiments, one or both of the opposing cooling sealing members are cooled with a suitable liquid, e.g. water. The cooling sealing members may be cooled by passing temperature controlled liquid, e.g. water, through or past the cooling sealing members at a defined flow rate.

In some embodiments, the first heat-sealed portion of the packaging is compressed with opposing cooling sealing members at a force of at least about 100 N, optionally at least about 150 N, optionally at least about 200 N, optionally at least about 250 N, optionally at least about 300 N, optionally at least about 350 N, optionally at least about 400 N, optionally at least about 450 N.

In some embodiments, the first heat-sealed portion of the packaging is compressed with opposing cooling sealing members at a force of from about 100 N to about 1000 N, optionally from about 125 N to about 925 N, optionally from about 175 N to about 875 N, optionally from about 225 N to about 825 N, optionally from about 300 N to about 700 N, optionally from about 375 N to about 625 N, optionally from about 400 N to about 600 N, optionally from about 450 N to about 550 N.

In some embodiments, the first heat-sealed portion of the packaging is compressed with opposing cooling sealing members for at least about 0.05 seconds, optionally at least about 0.1 seconds, optionally at least about 0.15 seconds, optionally at least about 0.2 sections, optionally at least about 0.25 seconds, optionally at least about 0.3 seconds.

In some embodiments, the first heat-sealed portion of the packaging is compressed with opposing cooling sealing members for no greater than about 1 seconds, optionally no greater than about 0.9 seconds, optionally no greater than about 0.8 seconds, optionally no greater than about 0.7 seconds, optionally no greater than about 0.6 seconds, optionally no greater than about 0.5 seconds, optionally no greater than about 0.4 seconds, optionally no greater than about 0.3 seconds.

In some embodiments, the first heat-sealed portion of the packaging is compressed with opposing cooling sealing members for from about 0.05 seconds to about 1 second, optionally from about 0.075 seconds to about 0.8 seconds, optionally from about 0.1 seconds to about 0.75 seconds, optionally from about 0.125 seconds to about 0.7 seconds, optionally from about 0.175 seconds to about 0.65 seconds, optionally from about 0.2 seconds to about 0.5 seconds, optionally from about 0.225 seconds to about 0.45 seconds, optionally from about 0.25 seconds to about 0.35 seconds.

In some embodiments, the first heat-sealed portion of the packaging is compressed with opposing cooling sealing members at a temperature of from about 1 °C to about 60 °C, at a force of from about 100 N to about 1000 N, and for from about 0.05 seconds to about 1 second.

After compressing the first heat-sealed portion of the packaging with cooling sealing members, the package is said to have been embossed by the surface of the cooling sealing members. In some embodiments, the opposing cooling sealing members may emboss the package with the negative pattern on the surface of the opposing cooling sealing members, i.e. with peaks of the patterned surface of the cooling sealing members forming indentations in the surface of the packaging.

In some embodiments, the integrity of the seal is inspected, for example by visual inspection. In some embodiments, the integrity of the seal is automatically inspected, for example by a machine. The seal may be inspected and assessed to confirm whether there is a defect in the seal. The packages which comprise an unacceptable defect may be disposed of.

The method of preparing a sealed package may be performed by a machine. The machine may be a "fill and seal" machine or a "form-fill-seal machine".

After carrying out the method, and after compressing the first heat-sealed portion of the packaging with opposing cooling sealing members, the packing may be sterilised, e.g. heat sterilised.

### Apparatus for preparing sealed packages

In a second aspect, there is provided an apparatus for preparing a sealed package containing food, the apparatus comprising:
opposing heat sealing members that can compress two opposing walls of packaging material together to fuse them together,
opposing cooling sealing members,
   wherein at least one of the cooling sealing members has a surface, wherein a first portion of the surface is a patterned surface comprising peaks and/or troughs, and a second portion is flat and corresponds to a flat section of the opposing cooling sealing member,
wherein the apparatus is operable to carry out the method of the first aspect.

The optional and preferred features, and combinations thereof, for the method for preparing sealed packages apply equally to the features of the apparatus for preparing sealed packages.

The apparatus may comprise two sets of opposing heat sealing members, a first set and a second set. The apparatus may comprise two sets of opposing heat sealing members, a first set and a second set, that can compress two opposing walls of packaging material together to fuse them together. The first set of opposing heat sealing members may compress two opposing walls of packaging material together. The second set of opposing heat sealing members may compress two opposing walls of packaging material together after the walls have been compressed together by the first set of opposing heat sealing members.

The opposing heat sealing members may made from any suitable material. The opposing heat sealing members may be made from a metal. The metal may be selected from brass, bronze, beryllium-copper alloy, and steel. The steel may be stainless steel. The opposing cooling sealing members may made from any suitable material. The opposing cooling sealing members may be made from a metal. The metal may be selected from brass, bronze, beryllium-copper alloy, and steel. The steel may be stainless steel.

The apparatus may comprise a heating means. The heating means may heat at least one of the opposing heat sealing members, optionally both of the opposing heat sealing members.

The apparatus may comprise a cooling means. The cooling means may cool at least one of the opposing cooling sealing members, optionally both of the opposing cooling sealing members.

The apparatus may comprise an inspection system. The inspection system may assess the integrity of the sealed package containing food, for example by visual inspection. In some embodiments, packages which contain unacceptable defects may be disposed of. The inspection system may be an automated inspection system.

The apparatus for preparing a sealed package containing food may be part of a "fill and seal" machine or a "form-fill-seal" machine. The apparatus is suitable for use in both a "fill and seal" machine and a "form-fill-seal" machine.

A "fill and seal" machine is set up to receive a pre-formed package with one opening. For example, the packaging may be a pouch with one opening at the top, i.e. with all other edges of the pouch being fused together and sealed. In a "fill and seal" machine, the pre-formed package is received, filled with the food product, then sealed.

A "form-fill-seal" machine on the other hand is set up to receive reel stock of packaging material. In this case, the reel stock of packaging material is fed into the machine, formed into the package, filled with food product, and finally the package can be sealed.

### Packages containing food

In a third aspect, there is provided a heat-sealed package containing food and comprising opposing walls, wherein the heat-sealed package is formable in a method according to the first aspect, wherein the heat-sealed package comprises a heat-sealed portion comprising a first portion having an embossed pattern therein and a flat, unembossed second portion, extending in a line at least partway across the heat-sealed portion.

In some embodiments, the heat-sealed package is a pouch. The pouch may contain food and comprise opposing walls. The food may be any food suitable for consumption, for example the food may be human food or pet food. The food may be perishable food. Perishable food may be defined as foods that are susceptible to decay, spoilage, or become unsafe to eat during storage, in particular if not stored at below ambient temperature. In some embodiments, the food is pet food. The pet food may be feline pet food or canine pet food. The food may be or may comprise a liquid, for example a gravy. The liquid may be or may comprise water.

The heat-sealed package may contain from about 1 g to about 500 g of food, optionally from about 2 g to about 400 g of food, optionally from about 5 g to about 250 g of food, optionally from about 10 g to about 220 g of food, optionally from about 20 g to about 175 g of food, optionally from about 30 g to about 100 g of food.

The heat-sealed package may contain at least about 0.5 g of food, optionally at least about 1 g of food, optionally at least about 2 g of food, optionally at least about 3 g of food, optionally at least about 5 g of food, optionally at least about 7 g of food, optionally at least about 10 g of food, optionally at least about 15 g of food, optionally at least about 20 g of food, optionally at least about 25 g of food, optionally at least about 30 g of food, optionally at least about 40 g of food.

The heat-sealed package may contain no greater than about 1000 g of food, optionally no greater than about 800 g of food, optionally no greater than about 600 g of food, optionally no greater than about 500 g of food, optionally no greater than about 400 g of food, optionally no greater than about 350 g of food, optionally no greater than about 300 g of food, optionally no greater than about 250 g of food, optionally no greater than about 220 g of food, optionally no greater than about 150 g of food, optionally no greater than about 100 g of food.

In some embodiments, the package is made from packaging. The packaging may be the packaging described according to the method of forming a sealed package. For example, the packaging may be a mono-material, wherein the mono-material is selected from a PP mono-material or a PE mono-material.

In some embodiments, the walls of the package may have a thickness of from about 1 µm to about 500 µm, optionally from about 5 µm to about 300 µm, optionally from about 10 µm to about 200 µm, optionally from about 20 µm to about 175 µm, optionally from about 30 µm to about 150 µm, optionally from about 50 µm to about 130 µm, optionally from about 70 µm to about 115 µm, optionally from about 90 µm to about 105 µm.

In some embodiments, the walls of the package may have a thickness of no greater than about 500 µm, optionally no greater than about 400 µm, optionally no greater than about 300 µm, optionally no greater than about 250 µm, optionally no greater than about 200 µm, optionally no greater than about 150 µm, optionally no greater than about 100 µm.

In some embodiments, the walls of the package may have a thickness of at least about 0.1 µm, optionally at least about 1 µm, optionally at least about 2 µm, optionally at least about 5 µm, optionally at least about 8 µm, optionally at least about 10 µm, optionally at least about 15 µm, optionally at least about 20 µm, optionally at least about 30 µm, optionally at least about 40 µm.

The food in the heat-sealed package may be sterilised. The heat-sealed package may have been after the package was heat-sealed. Sterilisation of the food and the package can prolong the shelf-life of the product. In some embodiments, the heat-sealed package containing food is sterilised by retort sterilisation. The heat-sealed package containing food may have been sterilised at a retort temperature of from about 100 °C to about 150 °C, optionally from about 110 °C to about 135 °C. The heat-sealed package containing food may have been sterilised for from about 5 minutes to about 90 minutes, optionally from about 10 minutes to about 60 minutes.

According to the present disclosure, the heat-sealed package comprises a heat-sealed portion comprising a first portion having an embossed pattern therein and a flat, unembossed second portion, extending in a line at least partway across the heat-sealed portion.

The pattern of the heat-sealed portion of the package may correspond to the surface of the opposing cooling sealing members. The embossed pattern may correspond to the surface of the first portion of the opposing cooling sealing members. The flat, unembossed second portion of the heat-sealed portion may correspond to the surface of the second portion of the opposing cooling sealing members. In other words, the described features of the surfaces of the opposing cooling sealing members may equally apply to the pattern of the embossed and unembossed portions of the heat-sealed package. For example, if the second portion of the opposing cooling sealing members is a flat straight line that extends across the entire length of the first heat-sealed portion of the packaging, then the heat-sealed packaging may comprise a flat straight unembossed line extending the whole way across the heat-sealed portion of the packaging.

The first portion and the second portion of the heat-sealed portion of the packaging may correspond to the first portion of the opposing cooling sealing members and the second portion of the opposing cooling sealing members respectively. In other words, the first portion of the heat-sealed portion having an embossed pattern therein may have been embossed by the first portion of the opposing cooling sealing members. The embossed pattern on the heat-sealed package may correspond to the pattern on the first portion of the opposing cooling sealing members. The flat, unembossed second portion of the heat-sealed package may correspond to the flat second portion of the opposing cooling sealing members.

The flat, unembossed second portion may extend in a line across substantially the entire length of the heat sealed portion of the heat-sealed package. The entire length means that the line extends from one edge of the heat sealed portion to the opposing edge of the heat sealed portion. The flat, unembossed second portion of the heat-sealed portion of the packaging may be disposed between two portions having an embossed pattern therein.

The flat, unembossed second portion may extend in a line at least part way across the heat-sealed portion of the packaging, wherein the width of the line is no greater than about 6 mm, optionally no greater than about 5 mm, optionally no greater than about 4 mm, optionally no greater than about 3 mm, optionally no greater than about 2.5 mm.

In some embodiments, the width of the line is of from about 0.1 mm to about 6 mm, optionally from about 0.3 mm to about 5 mm, optionally from about 0.6 mm to about 4.5 mm, optionally from about 0.9 mm to about 4 mm, optionally from about 1.3 mm to about 3.5 mm, optionally from about 1.6 mm to about 3.2 mm, optionally from about 1.8 mm to about 3.1 mm, optionally from about 2 mm to about 3 mm, optionally from about 2.2 mm to about 2.8 mm, optionally from about 2.2 mm to about 2.6 mm.

In some embodiments, the width of the heat-sealed portion is from about 4 mm to about 20 mm, optionally from about 4.5 mm to about 18 mm, optionally from about 5 mm to about 16 mm, optionally from about 5.5 mm to about 14 mm, optionally from about 6 mm to about 11 mm, optionally from about 6.5 mm to about 10 mm, optionally from about 7 mm to about 9 mm.

In some embodiments, the heat-sealed portion of the package comprises a first portion having an embossed pattern therein, wherein the embossed pattern comprises an array of indentations and/or ridges. The indentations are preferably point-like indentations, e.g. formed from peaks on the cooling sealing members, e.g. the projections on the cooling sealing members having a shape selected from square-based pyramid, quadrilateral-based pyramid, triangle-based pyramid, circle-based pyramid, cone, and frustum. The embossed pattern may be a negative pattern of the patterned surface of the cooling sealing members (i.e., the indentations of the embossed pattern correspond to the pattern of the peaks of the cooling sealing members, and the ridges of the embossed pattern correspond to the pattern of the troughs of the cooling sealing members). The array of indentations and/or ridges may be a 2-dimensional array on the surface of the heat-sealed portion of the packaging. The 2-dimensional array may be such that the indentations and/or ridges exhibit a 2-dimensional periodicity across the surface of the heat-sealed portion of the packaging. The 2-dimensional periodicity may be a periodicity along two axes which are at an angle, e.g. perpendicular, to one another. In other words, the array of indentations and/or ridges may be arranged in a regular, grid-like configuration (e.g., having rows and columns). For example, the ridges may be formed from an array of a first set of parallel straight-line projections, and a second set of parallel straight-line projections, which crossing the first set of parallel straight-line projections, and the indentations are formed by the areas between the crossing sets of projections. The array of a first set of parallel straight-line projections and array of second set of parallel straight-line projections are at an angle to one another and the angle may be from 30 to 120 degrees, e.g. 70 to 100 degrees, e.g. 90 degrees. In an embodiment, the heat-sealed portion of the packaging may be rectangular, when viewed perpendicular to the surface of the packaging that contacts the cooling sealing members, and the first set of parallel straight-line projections are parallel to one edge (say a 'first edge') of the heat-sealed portion of the packaging, and the second set of parallel straight-line projections are set at 90 degrees to the first set of parallel straight-line projections (so therefore parallel to an edge that is 90 degrees to the first edge of the heat-sealed portion of the packaging). In some embodiments, the heat-sealed portion of the packing may be rectangular, when viewed perpendicular to the surface that contacts the cooling sealing members, and optionally neither the first set or second set of parallel straight-line projections are parallel to any edge (say a 'first edge') of the heat-sealed portion of the packaging, e.g. and may be disposed at an angle of 30 to 60 degrees, e.g. about 45 degrees, relative to an edge. e.g. a longest edge of the heat-sealed portion of the packaging.

In some embodiments, the 2-dimensional periodicity is exhibited along two axes which are not perpendicular to each other. In this embodiment, adjacent indentations and/or ridges may, for example, be aligned in columns, but no longer in rows.

The indentations and/or ridges may be arranged in a grid-like configuration such that adjacent indentations are substantially aligned in rows along each of the edges (the length and width) of the heat-sealed portion of the packaging and/or adjacent ridges are substantially aligned along each of the edges of the heat-sealed portion of the packaging. "Edges" in this context are the edges of the surface of the heat-sealed portion of the packaging, i.e. the surface that contacts the cooling sealing members. In other words, the rows and columns of indentations and/or ridges of the grid-like configuration may run substantially parallel to the edges of the heat-sealed portion of the packaging.

The grid-like array may be such that ridges and/or rows of indentations may be disposed at an angle to an edge of the heat-sealed portion of the packaging (e.g. the longest edge of the heat-sealed portion of the packaging and/or the shortest edge of the heat-sealed portion of the packaging) such that adjacent indentations do not run parallel to the edge of the heat-sealed portion of the packaging and/or adjacent ridges do not run parallel to said edge of the heat-sealed portion of the packaging. In other words, the ridges and/or rows of indentions of the grid-like configuration may run at an angle to the edge of the heat-sealed portion of the packaging, wherein the angle is not 90 ° or 180 °. For example, the angle of the ridges and/or rows of indentations may be at an angle of from 30 degrees to 60 degrees, e.g. about 40 to 50 degrees, e.g. about 45 degrees to an edge of the heat-sealed portion of the packaging, which may be the longest edge of the heat-sealed portion of the packaging.

The embossed pattern of heat-sealed portion of the packaging comprising indentations and/or ridges may be a random pattern of indentations and/or ridges. The pattern of the indentations and/or ridges may be random.

In some embodiments, the embossed pattern of the heat-sealed portion of the packaging may have an indentations density (i.e. the number of indentations in a square millimetre of the embossed area of the packaging) of at least about 0.5 indentations per mm², optionally at least about 0.75 indentations per mm², optionally at least about 1 indentation per mm², optionally at least about 1.5 indentations per mm². For example, the embossed pattern may have an indentation density such that 100 indentations are found in an area of about 60 mm² (i.e., an indentation density of about 1.67 peaks per mm²).

In some embodiments, the embossed pattern may have an indentation density of no greater than about 5 indentations per mm², optionally no greater than about 4 indentations per mm², optionally no greater than about 3.5 indentations per mm², optionally no greater than about 2.75 indentations per mm², optionally no greater than about 2.25 indentations per mm², optionally no greater than about 2 indentations per mm².

In some embodiments, the embossed pattern may have an indentation density of from about 0.5 indentations per mm² to about 5 indentations per mm², optionally from about 0.6 indentations per mm² to about 4.5 indentations per mm², optionally from about 0.8 indentations per mm² to about 4 indentations per mm², optionally from about 0.9 indentations per mm² to about 3 indentations per mm², optionally from about 1.2 indentations per mm² to about 2.5 indentations per mm², optionally from about 1.3 indentations per mm² to about 2 indentations per mm².

In some embodiments, the pitch of the indentations and/or ridges is from about 0.1 mm to about 3 mm, optionally from about 0.2 mm to about 2.5 mm, optionally from about 0.3 mm to about 2.2 mm, optionally from about 0.4 mm to about 2 mm, optionally from about 0.5 mm to about 1.6 mm, optionally from about 0.6 mm to about 1.5 mm, optionally from about 0.8 mm to about 1.2 mm. The pitch may be defined as the distance from the depth of the indentation to the height of the ridges.

The shortest distance from adjacent indentations and/or ridges may be from about 0.01 mm to about 3 mm, optionally from about 0.1 mm to about 2.5 mm, optionally from about 0.2 mm to about 2.2 mm, optionally from about 0.3 mm to about 2 mm, optionally from about 0.5 mm to about 1.6 mm, optionally from about 0.6 mm to about 1.5 mm, optionally from about 0.8 mm to about 1.2 mm. In some embodiments, the separation between adjacent indentations and/or ridges is equal.

According to the present disclosure, the heat-sealed portion of the packaging comprises an unembossed second portion, extending in a line at least part way across the heat-sealed portion.

In some embodiments, the unembossed second portion is a flat line. In some embodiments, flat means that there is substantially no indentations and/or ridges.

In some embodiments, the unembossed second portion is flat and extends in a line across the whole of the heat-sealed portion of the packaging. The unembossed second portion may have been formed by the flat second portion of the surface of the opposing cooling sealing members.

The unembossed second portion may extend across a portion of the length of the heat-sealed portion of the packaging, optionally wherein it does not extend across the centre of the heat-sealed portion of the packaging. The unembossed second portion may extend across the entire length of the heat-sealed portion of the packaging. The entire length means that the unembossed portion extends substantially from one edge of the heat-sealed portion to the opposing edge of the heat-sealed portion. The unembossed portion may extend across the outer edges of the heat-sealed portion of the packaging.

In some embodiments, the unembossed portion has a width of no greater than about 6 mm, optionally no greater than about 5 mm, optionally no greater than about 4 mm, optionally no greater than about 3 mm, optionally no greater than about 2.5 mm. "Width" of the unembossed portion in this context is measured in a direction perpendicular to a closest edge of the heat-sealed portion of the packaging to the unembossed portion of the packaging, and along which the unembossed portion is disposed.

In some embodiments, unembossed portion has a width of at least about 0.5 mm, optionally at least about 0.8 mm, optionally at least about 1 mm, optionally at least about 1.2 mm, optionally at least about 1.5 mm, optionally at least about 2 mm.

In some embodiments, unembossed portion and has a width of from about 0.1 mm to about 6 mm, optionally from about 0.3 mm to about 5 mm, optionally from about 0.6 mm to about 4.5 mm, optionally from about 0.9 mm to about 4 mm, optionally from about 1.3 mm to about 3.5 mm, optionally from about 1.6 mm to about 3.2 mm, optionally from about 1.8 mm to about 3.1 mm, optionally from about 2 mm to about 3 mm, optionally from about 2.2 mm to about 2.8 mm, optionally from about 2.2 mm to about 2.6 mm.

In some embodiments, the width of the heat-sealed portion of the packaging is from about 3 mm to about 40 mm, optionally 4 mm to about 20 mm, optionally from about 4.5 mm to about 18 mm, optionally from about 5 mm to about 16 mm, optionally from about 5.5 mm to about 14 mm, optionally from about 6 mm to about 11 mm, optionally from about 6.5 mm to about 10 mm, optionally from about 7 mm to about 9 mm.

In some embodiments, the unembossed portion of the heat-sealed portion of the packaging is a flat line. The line may be a straight line, bent line, curved line, or a tortuous line (i.e. a line that changes direction a plurality of times). The line may be a number of connected straight lines at different angles. The line may be interrupted by the embossed portion of the heat-sealed portion of the packaging (i.e., a number of disconnected lines). The line may extend along a longest edge of the heat-sealed portion of the packaging. The line may extend along an edge of the packaging closest to the heat sealed portion of the packaging.

In some embodiments, the unembossed portion of the heat-sealed portion of the packaging is disposed between two embossed portions of the heat-sealed portion of the packaging.

In some embodiments, the heat-sealed portion comprises a first portion having an embossed pattern therein, wherein the embossed pattern comprises an array of indentations and/or ridges, an unembossed second portion which is flat, and a third portion having an embossed pattern therein, wherein the embossed pattern comprises an array of indentations and/or ridges. The embossed pattern of the third portion may be the same as the embossed pattern of the first portion. The embossed pattern of the third portion may be different to the embossed pattern of the first portion. In some embodiments, the unembossed second portion is disposed between the first portion and the third portion.

In some embodiments, the unembossed second portion comprises at least one ridge which runs along at least a portion of the length of the unembossed second portion of the heat-sealed portion of the packaging. The at least one ridge results in an unembossed second portion which comprises ridge(s) and flat surfaces that run in the direction of the length of the heat-sealed portion of the packaging. These flat surfaces may also be termed valleys in the unembossed second portion. In some embodiments, the at least one ridge in the unembossed second portion of the heat-sealed portion of the packaging runs along substantially the entire length of the unembossed second portion of the heat-sealed portion of the packaging.

In some embodiments, the heat-sealed portion of the packaging has a surface which has a shape, when viewed from a direction perpendicular to the plane of the surface, selected from quadrilateral, oval, and circular, preferably quadrilateral. The quadrilateral surface may be a surface shape selected from square, rectangle, parallelogram, trapezoid, rhombus, and rhomboid.

The method, apparatus, and packages will be described by the following non-limiting embodiments.

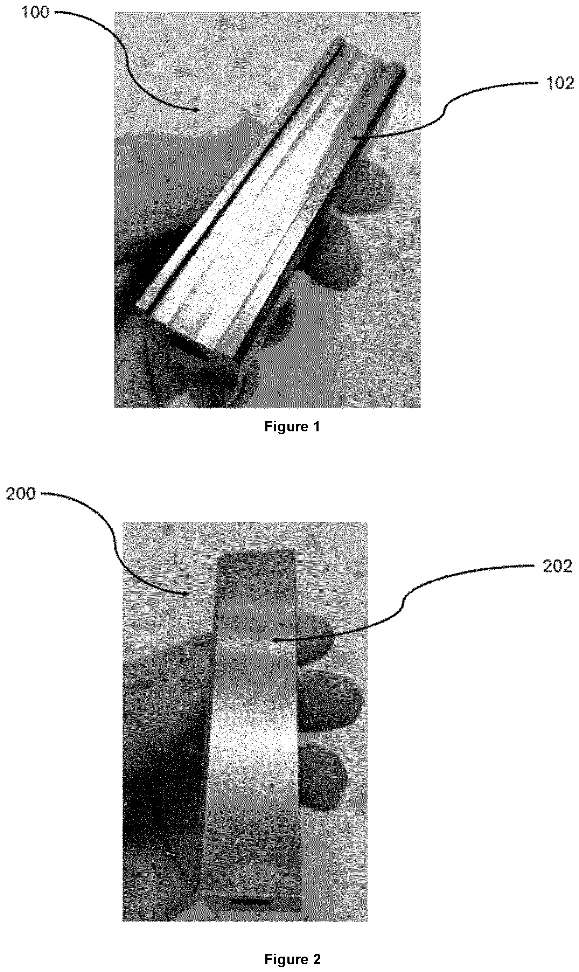

Figures 1 and 2 show examples of heat-sealing members, 100 and 200. The heat-sealing member 100 in Figure 1 comprises a C shaped surface, as viewed in cross-section along the direction of the longest edge of the heat-sealing member, with a flat portion 102. Heat-sealing members with this configuration are typically used as the first set of opposing heat-sealing members. The heat-sealing member 200 in Figure 2 comprises a uniform flat surface 202. Heat-sealing members with this configuration are typically used as the second set of opposing heat-sealing members.

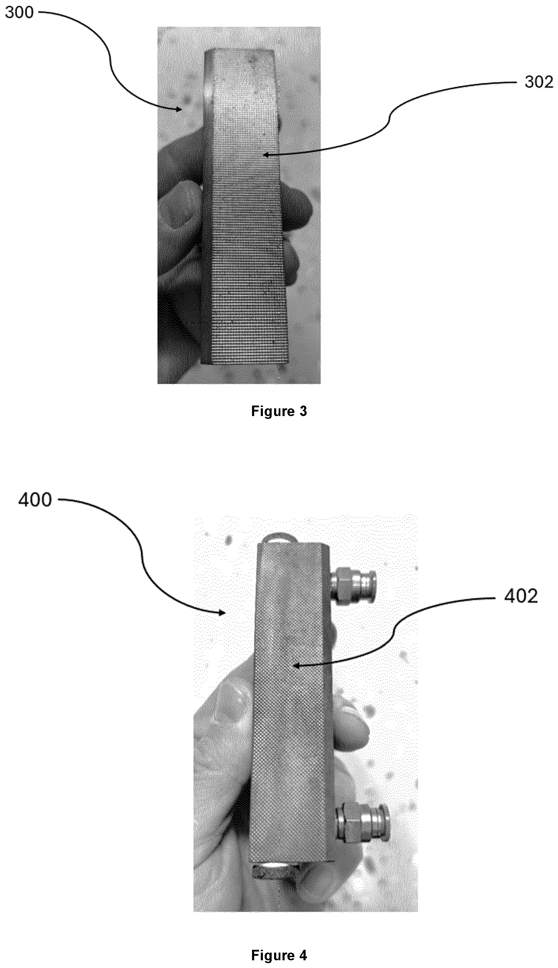

Figures 3 and 4 show comparative examples of cooling sealing members, 300 and 400, which do not comprise a surface with a second portion which is flat. The cooling sealing member 300 in Figure 3 comprises a patterned surface 302 with a plurality of peaks and troughs arranged in a grid-like configuration, wherein the troughs and rows of peaks run parallel to the edges (both the longest and shortest edges) of the cooling sealing member 300 (i.e., the rows of peaks, and the troughs, are aligned with the edges of the cooling sealing member). The cooling sealing member 400 in Figure 4 comprises a patterned surface 402 with a plurality of peaks and troughs arranged in a grid-like configuration, wherein the peaks and troughs run at an angle (i.e., do not parallel) to both the longest and shortest edges of the cooling sealing member 400 (i.e., the peaks and troughs are not aligned with the surface dimensions of the cooling sealing member); the angle of the troughs to the edges of the longest surface is 45 degrees and the angle between the troughs that crossing one another is 90 degrees. The pattern on the surface of the cooling sealing member 300 may be termed a straight crisscross pattern. The pattern on the surface of the cooling sealing member 400 may be termed an angled crisscross pattern.

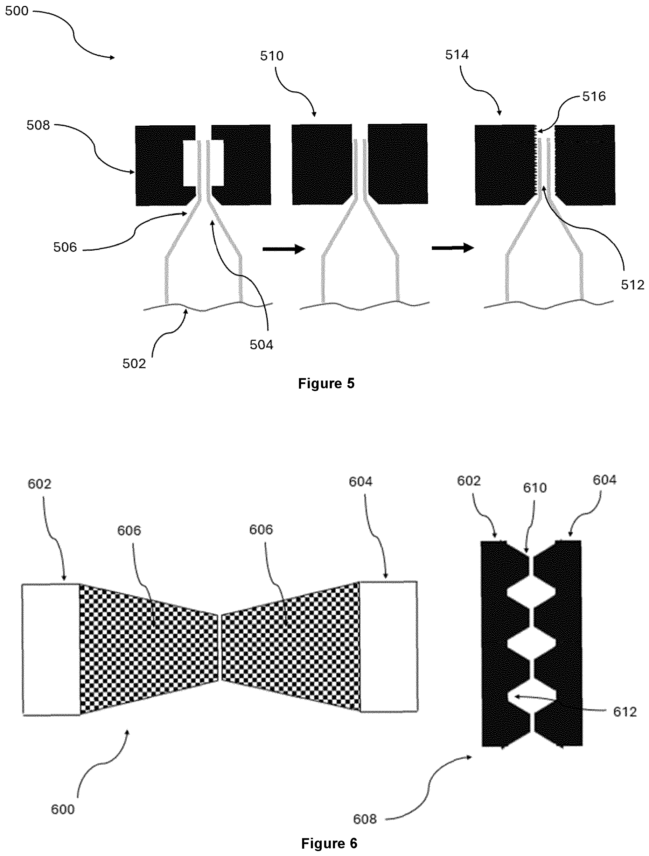

Figure 5 shows a schematic drawing of an example of a sealing system 500 for preparing sealed packages. A packaging containing food 502 is sealed by the sealing system 500. First, opposing walls 504 and 506, which form the opening of the packaging containing food 502, are compressed with a first set of opposing heat-sealing members 508. The first set of opposing heat-sealing members 508 may be, for example, the heat-sealing members 100 depicted in Figure 1. The opposing walls 504 and 506 of the packaging are then compressed with a second set of heat-sealing members 510. The second set of opposing heat-sealing members 510 may be, for example, the heat-sealing members 200 depicted in Figure 2. In some embodiments, there may be only the first set of heat-sealing members 508 or only the second set of heat-sealing members 510. A first heat-sealed portion 512 of the packaging 502 is formed after compressing the opposing walls 504 and 506 with the heat-sealing member(s). The first heat-sealed portion 512 of the packaging is then compressed with opposing cooling sealing members 514 with patterned surfaces 516, affording the sealed package. The opposing cooling sealing members 514 may be, for example, the cooling sealing member 300 depicted in Figure 3, or the cooling sealing member 400 depicted in Figure 4.

Figure 6 shows schematic drawings of opposing cooling sealing members 602 and 604 when compressed together in an isometric view 600 (left) and as viewed as a cross section 608 (right). Both cooling sealing members 602 and 604 comprise a surface 606 with a patterned surface comprising peaks 610 and troughs 612, and both lack a second portion that is flat. In some embodiments, each of the cooling sealing members 602 and 604 may be the cooling sealing member 300 depicted in Figure 3. When the opposing cooling sealing members 602 and 604 are compressed together, the surface pattern of peaks and troughs is not such that the peaks 610 are received by troughs 612. Instead, the peaks 610 of cooling sealing member 602 may align with the peaks 610 of cooling sealing member 604 and the troughs 612 of cooling sealing member 602 may align with the troughs of cooling sealing member 604. This creates areas of increased pressure where the peaks meet and areas of reduced pressure where the troughs align.

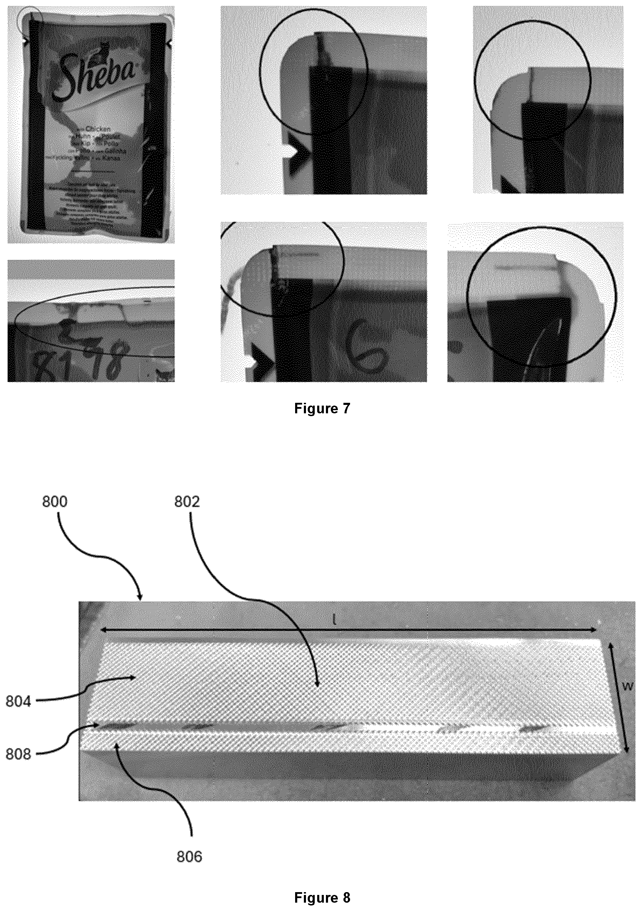

Figure 7 shows examples of microchannels formed in sealed packages, where a penetrating, pigmented liquid was used to aid visualisation. Microchannels can be seen within the circled areas as dark lines penetrating from the inside of the package to the outside of the package through the seal. Sealed packages are more prone to microchannels at the outer edges of the seal.

Figure 8 shows an example of a cooling sealing member according to the present disclosure. The cooling sealing member 800 comprises a surface 802 with dimensions of length (I) and width (w). The surface 802 comprises a first portion 804 which is patterned and comprises peak and troughs, a second portion 808 which is flat, and a third portion 806 which is patterned and comprises peak and troughs. The first portion 804 has the same patterned surface as the third portion 806. The first portion 804 and third portion 806 may therefore both be termed the first portion. The portions 804 and 806 which are patterned comprise peaks and troughs which are aligned in a grid-like configuration and angled such that the peaks and troughs do not run parallel to the edges of the cooling sealing member 800 (i.e., adjacent peaks and troughs do not align with the surface dimensions of the cooling sealing member). In an alternative embodiment, the grid-like configuration may be orientated such that the peaks and troughs run parallel to the edges of the cooling sealing member 800. The second portion 808 which is flat extends across the entire length of the cooling sealing member 800. The entire length means that it runs from one edge of the cooling sealing member to the opposing edge of the cooling sealing member. By running across the entire length of the cooling sealing member 800, the patterned portion of the surface is interrupted by a flat portion, or, described another way, the second portion is disposed between two patterned portions of the cooling sealing member. The width of the second portion 808 which is flat may be defined as the shortest distance from the first portion 804 to the third portion 806.

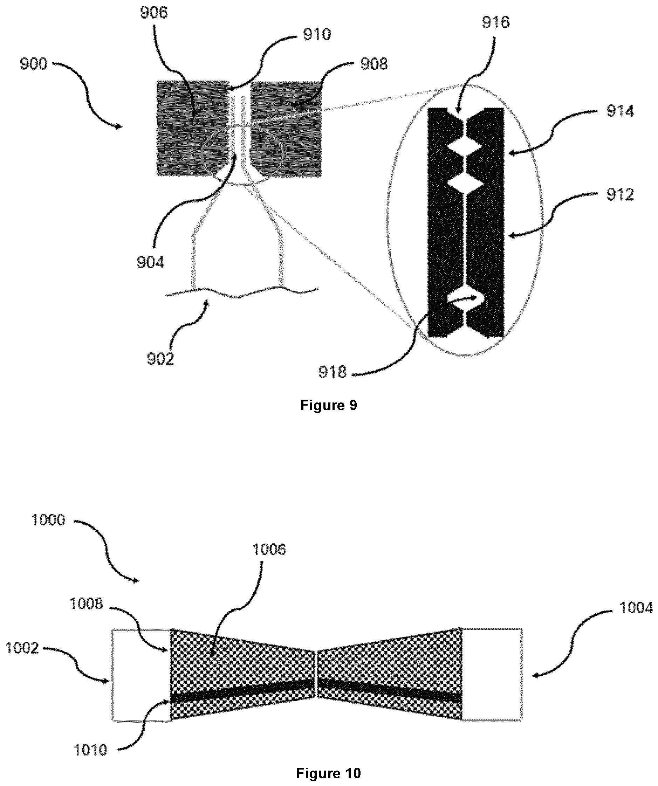

Figure 9 shows a schematic drawing of the use of an example of opposing cooling sealing members 900, first cooling sealing member 906 and opposing second cooling sealing member 908, according to the present disclosure. The opposing cooling sealing members 900 may be, for example, the cooling sealing member 800 in Figure 8. The first heat-sealed portion 904 of package 902 is compressed between opposing cooling sealing members 900, first cooling sealing member 906 and second cooling sealing member 908. The first heat-sealed portion 904 may have been formed by compressing between heat-sealing members described in sealing system 500 as depicted in Figure 5. The opposing cooling sealing members 906 and 908 both have a surface 910. The surface 910 comprises a flat portion 912 and a patterned portion 914 comprising peaks 916 and troughs 918, wherein the flat portion 912 is disposed between two sections of the patterned portion 914. When the opposing cooling sealing members 906 and 908 are compressed together, the flat portion 912 of the first cooling sealing member 906 corresponds to the flat portion 912 of the second cooling sealing member 908, and the patterned portion 914 of the first cooling sealing member 906 corresponds to the patterned portion 914 of the second cooling sealing member 908. The raised pressure exerted on the packaging compressed between the flat portions 912 results in contamination between displaced to the patterned portions 914 on either side of the flat portions 912. In particular, contamination is readily displaced to the areas of lower pressure created in areas where troughs 918 of the first cooling sealing member 906 correspond to troughs 918 of the opposing second cooling sealing member 908. By compressing the first heat-sealed portion 904 of the packaging in this way, the seals were found to have improved structural integrity and the packaging was not deformed.

Figure 10 shows an isometric view of the opposing cooling sealing members 1000. In some embodiments, each cooling sealing member may be the cooling sealing member 800 depicted in Figure 8. The opposing cooling sealing members 1000 comprise a first cooling sealing member 1002 and an opposing second cooling sealing member 1004. Each of the cooling sealing members 1002 and 1004 comprise a surface 1006. The surface 1006 comprises a flat portion 1010 and a patterned portion 1008 comprising peaks and troughs, wherein the flat portion 1010 is disposed between two sections of the patterned portion 1008. When the opposing cooling sealing members 1002 and 1004 are compressed together, the flat portion 1010 of the first cooling sealing member 1002 corresponds to the flat portion 1010 of the second cooling sealing member 1004, and the patterned portion 1008 of the first cooling sealing member 1002 corresponds to the patterned portion 1008 of the second cooling sealing member 1004.

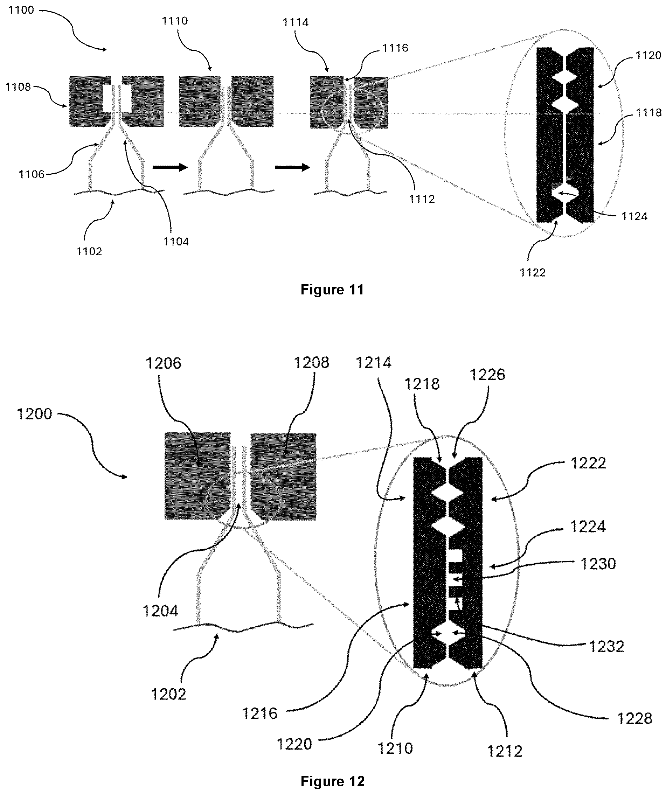

Figure 11 shows a schematic drawing of an example of a sealing system 1100 and an example of the process of sealing packaging. A packaging containing food 1102 is sealed by the sealing system 1000. First, opposing walls 1104 and 1106, which form the opening of the packaging containing food 1102, are compressed with a first set of opposing heat-sealing members 1108. The first set of opposing heat-sealing members 1108 may be, for example, the heat-sealing members 100 depicted in Figure 1. The opposing walls 1104 and 1106 are then compressed with a second set of heat-sealing members 1110. The second set of opposing heat-sealing members 1110 may be, for example, the heat-sealing members 200 depicted in Figure 2. In some embodiments, there may be only the first set of heat-sealing members 1108 or only the second set of heat-sealing members 1110. In some embodiments, at least a portion of the packaging compressed by the first set of heat-sealing members is compressed by the second set of heat-sealing members, preferably substantially the whole of the packaging compressed by the first set of heat-sealing members. A first heat-sealed portion 1112 of the packaging 1102 is formed after compressing the opposing walls 1104 and 1106 with the heat-sealing member(s). The first heat-sealed portion 1112 of the packaging is then compressed with opposing cooling sealing members 1114 with patterned surfaces 1116, affording the sealed package. The opposing cooling sealing members 1114 may be any set of opposing cooling sealing members according to the present disclosure, for example, a set of the cooling sealing member 800 depicted in Figure 8. The surface 1116 of the opposing cooling sealing members 1114 comprises a first portion 1120 which patterned comprising peaks 1122 and troughs 1124, and a second portion 1118 which is flat. The second portion 1118 is disposed between to sections of the first portion 1120 which is patterned. The second portion 1118 which is flat extends across at least a portion of the first heat-sealed portion 1112 of the packaging. The second portion 1118 of the surface 1116 of one of the cooling sealing members 1114 corresponds to the second portion 1118 of the opposing surface 1116 of the opposing cooling sealing member 1114.

Figure 12 depicts a schematic drawing of an example of an alternative embodiment of cooling sealing members 1200. The first heat-sealed portion 1204 of the packaging 1202 containing food is compressed between opposing cooling sealing members 1200, first cooling sealing member 1206 and opposing second cooling sealing member 1208. The first cooling sealing member 1206 has a surface 1210 comprising a first portion 1214 which is patterned and comprises peaks 1218 and troughs 1220, and a second portion 1216 which is flat. The second portion 1216 which is flat is disposed between two sections of the first portion 1214 which is patterned. The opposing second cooling sealing member 1208 has a surface 1212 comprising a first portion 12222 which is patterned and comprises peaks 1226 and troughs 1228, and a second portion 1224 which is flat. The second portion 1224 which is flat is disposed between two sections of the first portion 1222 which is patterned. The second portion 1224 which is flat further comprises grooves/valleys 1230 and ridges 1232. The grooves/valleys 1230 and ridges 1232 run in the direction of the length of the cooling sealing member 1208. When the opposing cooling sealing members 1206 and 1208 are compressed together, the flat portion 1216 of the first cooling sealing member 1206 corresponds to the flat portion 1224 of the second cooling sealing member 1208, and the patterned portion 1214 of the first cooling sealing member 1206 corresponds to the patterned portion 1222 of the second cooling sealing member 1208. In this embodiment, the additional grooves 1230 and ridges 1232 in surface 1212 serve to increase the pressure exerted on the first heat-sealed portion 1204. This may further assist in interrupting microchannel formation. Furthermore, the groves/valleys 1230 provide space for the contamination to be displaced to.

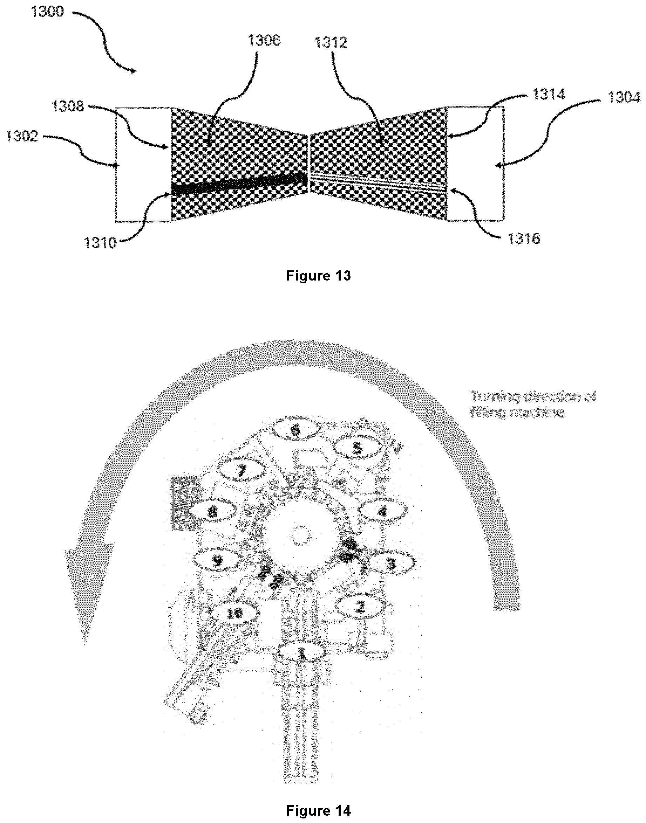

Figure 13 shows an isometric view of an example of opposing cooling sealing members 1300. The opposing cooling sealing members 1300 may be the opposing cooling sealing member 1206 and 1208 depicted in Figure 12. The opposing cooling sealing members 1300 comprise a first cooling sealing member 1302 and an opposing second cooling sealing member 1304. The first cooling sealing member 1302 comprises a surface 1306 comprising a first portion 1308 which is patterned comprising peaks and troughs, and a second portion 1310 which is flat, wherein the second portion 1310 is disposed between two sections of the first portion 1308. The opposing second cooling sealing member 1304 comprises a surface 1312 comprising a first portion 1314 which is patterned comprising peaks and troughs, and a second portion 1316 which is flat, wherein the second portion 1316 is disposed between two sections of the first portion 1314. The second portion 1316 of the second cooling sealing member 1304 further comprises grooves/valleys and ridges which run along the entire length of surface 1312 of the second cooling sealing member 1304. The entire length means that the grooves/valleys and ridges run from one edge of the surface 1312 to the opposing edge of the surface 1312. The second portion 1310 which is flat of the first cooling sealing member 1302 corresponds to the second portion 1316 which is flat of the opposing cooling sealing member 1304.

Figure 14 shows a schematic drawing of an example of a "fill and seal" machine in which the sealing method for packages of the present disclosure can be used. The machine has a plurality of stations through which the package passes, and each station is labelled from '1' to `10' in Figure 14. Station 1 grabs the packaging which may be a pre-formed pouch with an opening. Station 2 applies coding to the packing before it is opened in station 3. The packing is filled in stations 4 and 5 (each station may introduce different food, for example meat pieces then sauce) before being closed in station 6. Stations 7, 8, and 9 are the sealing stations. Station 7 compresses the walls of the packaging with a first set of opposing heat-sealing members. Station 8 compressed the walls of the packaging with a second set of opposing heat sealing members to form a first heat-sealed portion of the packaging. Station 9 compresses the first heat-sealed portion of the packaging with opposing cooling sealing members to produce a sealed package. Station 10 ejects the sealed package from the "fill and seal" machine.

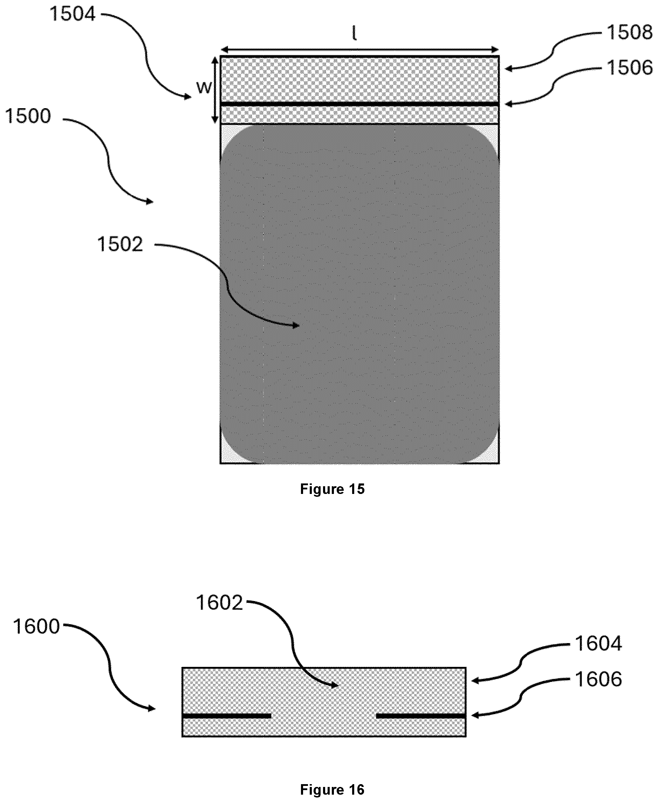

Figure 15 shows a schematic drawing of an example of a sealed packaging containing food 1500. The sealed package 1500 comprises a sealed portion comprising food 1502 and a seal 1504. The seal comprises an embossed portion 1508 and an unembossed portion 1506. The embossed portion 1508 corresponds to the patterned surface of the opposing cooling sealing members. The unembossed portion 1506 corresponds to the flat surface of the opposing cooling sealing members. The seal of the package has dimensions, length (I) and width (w). The dimensions of width and length of the seal of the package correspond to the width and length of the heat and cooling-sealing members. The unembossed portion 1506 (i.e., the flat line) has a width and a length. The unembossed portion 1506 extends across the entire length of the sealed portion 1502. The package 1500 may have been sealed using cooling sealing members 1000 as depicted in Figure 10. The integrity of the seals in packages 1500 comprising seal 1504 were found to comprise fewer defects than seals which do not comprise the unembossed portion 1506.

Figure 16 show a schematic drawing of an example of a cooling sealing member 1600 which comprises a surface 1602 comprising a first portion 1604 which is patterned comprising peaks and troughs, and a second portion 1606 which is flat, wherein the second portion 1606 which is flat extends across the outer edges of the surface 1602 of the cooling sealing member and does not extend across the centre of the surface 1602 of the cooling sealing member (i.e., the second portion 1606 which is a flat line is interrupted and does not extend across the centre of the surface 1602 of the cooling sealing member). The inventors found that the outer edges (i.e., the corners) of the seal are more prone to forming microchannels while the centre of the seal of the packages were less prone to forming microchannels.

### Examples

The presently disclosed subject matter will be further described by reference to the following non-limiting Examples.

### Example 1 - Sealing packages containing food - Sealing method 1

Mono-polypropylene packages containing 85 g of wet cat food were sealed using a fill & seal machine, namely a Pacraft CWS9, two up Fill & Seal machine (see Figure 14), at a speed of around 70 strokes / min. The mono-polypropylene packaging was in the form of an OPP 25 / OPP 20 / PP 60 µm laminate (OPP indicates oriented polypropylene). The method of sealing the packages is described in more detail below and is depicted in Figure 11.

The opening of a package was compressed with a first set of opposing heat-sealing members 1108 (with structure 100 as seen in Figure 1). The opposing heat-sealing members 1108 were heated to 165 °C and compressed at a force of 500 N for 0.3 seconds. The same portion of the packing was then compressed with a second set of opposing heat-sealing member 1110 with a uniform flat surface (with structure 200 as seen in Figure 2) to form the first heat-sealed portion of the packaging 1112. The opposing heat-sealing members 1110 were heated to 165 °C and compressed at a force of 500 N for 0.3 seconds.

The first heat-sealed portion of the packaging 1112 was then compressed with opposing cooling sealing members 1114 (with structure 800 as seen in Figure 8) to afford the sealed package. The opposing cooling sealing members 800 were cooled to 12 °C using cooled water and compressed at a force of 500 N for 0.3 seconds. The cooling sealing members 800 comprises a surface 802 with a first portion 804 which is patterned comprising peaks and troughs, and a second portion 808 which is flat. The second portion 808 which is flat is disposed between two portions which are patterned, 804 and 806. The second portion 808 which is flat extended across the whole of the first heat-sealed portion of the packaging. The second portion 808 which is flat of each cooling sealing member corresponded to the second portion 808 which is flat of the opposing cooling sealing member. The second portion 808 which is flat had a width of 2.5 mm. The total sealing width (i.e., the width of the packaging which was compressed by both the opposing heat-sealing members and the cooling sealing members) was 8 mm. The inventors found that by having a line which was narrow compared to the total width of the seal meant that microchannels could be successfully interrupted.

### Example 2 - Sealing packages containing food - Sealing method 2 - comparative

Mono-polypropylene packages containing 85 g of wet cat food were sealed using a Pacraft CWS9, two up Fill & Seal machine (see Figure 14), at a speed of around 70 strokes / min. The mono-polypropylene packaging was in the form of an OPP 25 / OPP 20 / PP 60 µm laminate. The sealing method was identical to that performed in Example 1, except standard cooling sealing members which comprised a patterned surface without a flat portion were employed (see cooling sealing member 300, Figure 3 and cooling sealing member 400, Figure 4). Both angled and straight crisscross patterned cooling sealing members were employed, resulting in similar defect rates.

### Example 3 - Testing of seal integrity

The integrity of seals in packages which were sealed according to method 1 in Example 1 and method 2 in Example 2 were assessed by two methods.

### Test Method 1

The sealed packages were stored at ambient temperature for a set period of time. The sealed packaged were inspected for leaks and for whether gas had developed inside. The production of gas indicates that the product has spoiled.

### Test Method 2

The seal integrity was assessed according to an industry standard method to examine tightness of canned food packages and other long shelf-life packages. The sealed packages were exposed to a bacteria slurry and stored at elevated temperature for a set period of time. The packages were inspected for the formation of gasses, where gas development indicates a spoiled product.

### Results

For both test methods, sealing method 1 was found to produce fewer defective packages (i.e., packages with a defective seal, for example due to the presence of a microchannel). Accordingly, seals on packages made from mono-materials (for example, mono polypropylene packages) were found to have fewer defects (i.e., greater structural integrity) when sealed with cooling sealing members comprising a flat portion on their surface compared to those sealed with cooling sealing members without a flat portion on their surface.

### Test Method 1

| | **Samples test** | **Defects found** | **PPM defect rate** |
|---|---|---|---|
| **Sealing Method 1** | 127000 | 7 | 55 |
| **Sealing Method 2** | 75616 | 26 | 344 |

### Test Method 2

| | **Samples test** | **Defects found** | **PPM defect rate** |
|---|---|---|---|
| **Sealing Method 1** | 7420 | 21 | 2830 |
| **Sealing Method 2** | 8000 | 75 | 9375 |

## Claims

1. A method of preparing a sealed package containing food, the method comprising:
providing a packaging containing food, the packaging having an opening formed from two opposing walls;
compressing the opposing walls of the packaging together with opposing heat sealing members, thereby closing the opening and fusing the walls together to form a first heat-sealed portion of the packaging;
compressing the first heat-sealed portion of the packaging with opposing cooling sealing members,
wherein at least one of the cooling sealing members has a surface, wherein a first portion is a patterned surface comprising peaks and/or troughs, and a second portion is flat and extends across at least a portion of the first heat-sealed portion of the packaging and corresponds to a flat section of the opposing cooling sealing member.

2. An apparatus for preparing a sealed package containing food, the apparatus comprising:
opposing heat sealing members that can compress two opposing walls of packaging material together to fuse them together;
opposing cooling sealing members,
wherein at least one of the cooling sealing members has a surface, wherein a first portion of the surface is a patterned surface comprising peaks and/or troughs, and a second portion is flat and corresponds to a flat section of the opposing cooling sealing member,
wherein the apparatus is operable to carry out the method of claim 1.

3. A heat-sealed package containing food and comprising opposing walls, wherein the heat-sealed package is formable in a method according to claim 1, wherein the heat-sealed package comprises a heat-sealed portion comprising a first portion having an embossed pattern therein and a flat, unembossed second portion, extending in a line at least part way across the heat-sealed portion.

4. The method of claim 1, the apparatus of claim 2, or the heat-sealed package of claim 3, wherein the food is pet food and/or wherein the food comprises a liquid.

5. The method of any of claims 1 and 4, wherein the packaging is a mono-material, optionally wherein the mono-material is selected from a PP mono-material and a PE mono-material,
or the heat-sealed package of any of claims 3 and 4, wherein the package is made from packaging, wherein the packaging is a mono-material, wherein the mono-material is selected from a polypropylene (PP) mono-material and a polyethylene (PE) mono-material.

6. The method of any of claims 1, 4 and 5, or the apparatus of any of claims 2 and 4, wherein the first portion of the surface of the cooling sealing member is a patterned surface comprising an array of peaks and/or troughs, optionally a 2-dimensional array, optionally wherein the 2-dimensional array is such that the peaks and/or troughs exhibit a 2-dimensional periodicity.

7. The method of any of claims 1, 4 to 6, or the apparatus of any of claims 2, 4 and 6, wherein the patterned surface has a peak density of at least about 0.5 peaks per mm², optionally at least about 0.75 peaks per mm², optionally at least about 1 peaks per mm², optionally at least about 1.5 peaks per mm².

8. The method of any of claims 1, 4 to 7, or the apparatus of any of claims 2, 4, 6 and 7, wherein the patterned surface comprises a plurality of projections and/or recesses, wherein the projections and/or recesses create the peaks and/or troughs of the patterned surface, optionally wherein the projections have a shape selected from square-based pyramid, quadrilateral-based pyramid, triangle-based pyramid, circle-based pyramid, cone, and frustum, and/or wherein the projections and/or peaks comprise a tip with a flat or rounded surface, preferably a flat surface.

9. The method of any of claims 1, 4 to 8, or the apparatus of any of claims 2, 4, 6 to 8, wherein the pitch of the peaks and/or troughs is from about 0.1 mm to about 3 mm, optionally from about 0.2 mm to about 2.5 mm, optionally from about 0.3 mm to about 2.2 mm, optionally from about 0.4 mm to about 2 mm, optionally from about 0.5 mm to about 1.6 mm, optionally from about 0.6 mm to about 1.5 mm, optionally from about 0.8 mm to about 1.2 mm.

10. The method of any of claims 1, 4 to 9, or the apparatus of any of claims 2, 4, 6 to 9, wherein the opposing cooling sealing members are aligned such that when the first heat-sealed portion of the packaging is compressed, the peaks on the first portion of the surface of the cooling sealing member do not correspond to the troughs on the first portion of the surface of the opposing cooling sealing member.

11. The method of any of claims 1, 4 to 10, or the apparatus of any of claims 2, 4, 6 to 10, wherein the second portion which is flat extends across the entire length of the first heat-sealed portion of the packaging, the length being the direction parallel to an edge of the packaging closest to first heat-sealed portion.

12. The method of any of claims 1, 4 to 11, the apparatus of any of claims 2, 4, 6 to 11, or the heat-sealed package of any of claims 3 to 5, wherein the second portion which is flat has a width, as measured along a direction perpendicular to an edge of the packaging closest to first heat-sealed portion, of from about 0.1 mm to about 6 mm, optionally from about 0.3 mm to about 5 mm, optionally from about 0.6 mm to about 4.5 mm, optionally from about 0.9 mm to about 4 mm, optionally from about 1.3 mm to about 3.5 mm, optionally from about 1.6 mm to about 3.2 mm, optionally from about 1.8 mm to about 3.1 mm, optionally from about 2 mm to about 3 mm, optionally from about 2.2 mm to about 2.8 mm, optionally from about 2.2 mm to about 2.6 mm.

13. The method of any of claims 1, 4 to 12, the apparatus of any of claims 2, 4, 6 to 12, or the heat-sealed package of any of claims 3 to 5, and 12, wherein the second portion is a flat line, optionally wherein the line is a straight line, bent line, curved line, or a tortuous line, and/or wherein the second portion is disposed between two sections of the first portion, wherein the first portion has a knurled pattern.

14. The method of any of claims 1, 4 to 13, or the apparatus of any of claims 2, 4, 6 to 13, wherein one or both of the opposing cooling sealing members are at a temperature of from about 1 °C to about 60 °C, optionally from about 2 °C to about 45 °C, optionally from about 2 °C to about 30 °C, optionally from about 2 °C to about 25 °C, optionally from about 4 °C to about 21 °C, optionally from about 6 °C to about 19 °C, optionally from about 7 °C to about 17 °C, optionally from about 8 °C to about 15 °C, optionally from about 9 °C to about 14 °C, optionally from about 10 °C to about 13 °C.

15. The method of any of claims 1, 4 to 14, the apparatus of any of claims 2, 4, 6 to 14, or the heat-sealed package of any of claims 3 to 5, 12, and 13, wherein the walls of the packaging have a thickness of from about 1 µm to about 500 µm, optionally from about 5 µm to about 300 µm, optionally from about 10 µm to about 200 µm, optionally from about 20 µm to about 175 µm, optionally from about 30 µm to about 150 µm, optionally from about 50 µm to about 130 µm, optionally from about 70 µm to about 115 µm, optionally from about 90 µm to about 105 µm.
